(19) Europäisches Patentamt / European Patent Office / Office européen des brevets

(11) **EP 4 322 061 A1**

(12) **DEMANDE DE BREVET EUROPEEN**

(43) Date de publication:
**14.02.2024 Bulletin 2024/07**

(21) Numéro de dépôt: **23190239.6**

(22) Date de dépôt: **08.08.2023**

(51) Classification Internationale des Brevets (IPC):
**G06N 3/045** (2023.01)   **G06N 3/084** (2023.01)
**G06N 3/091** (2023.01)   **G06N 3/0895** (2023.01)

(52) Classification Coopérative des Brevets (CPC):
**G06N 3/045; G06N 3/084; G06N 3/0895; G06N 3/091**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **08.08.2022 FR 2208172**

(71) Demandeur: **Commissariat à l'énergie atomique et aux énergies alternatives
75015 Paris (FR)**

(72) Inventeurs:
• **DALGATY, Thomas
  38054 GRENOBLE CEDEX 9 (FR)**
• **MALFANTE, Marielle
  38054 GRENOBLE CEDEX 9 (FR)**
• **REYBOZ, Marina
  38054 GRENOBLE CEDEX 9 (FR)**

(74) Mandataire: **Lavoix
2, place d'Estienne d'Orves
75441 Paris Cedex 09 (FR)**

(54) **DISPOSITIF ÉLECTRONIQUE ET PROCÉDÉ DE TRAITEMENT DE DONNÉES COMPORTANT AU MOINS UN MODÈLE D'INTELLIGENCE ARTIFICIELLE AUTO-ADAPTATIF AVEC APPRENTISSAGE LOCAL, SYSTÈME ÉLECTRONIQUE ET PROGRAMME D'ORDINATEUR ASSOCIÉS**

(57)   Ce dispositif de traitement est connecté à un capteur (15) et comprend un module (22) d'acquisition d'une donnée, un module (24) d'estimation d'une tâche associée à la donnée via un modèle de prédiction (60), et un module (28) de détermination d'une tâche résultante pour la donnée.

Le module de détermination calcule une grandeur (E) représentative de l'estimation ; puis sélectionne - en fonction de la grandeur - un parmi des modes assisté (ACL) et supervisés (SSL, AUL) de détermination ; et détermine - suivant ledit mode - la tâche résultante. En mode assisté de détermination, le module de détermination envoie à un utilisateur une requête en fourniture d'une tâche pour la donnée.

Le dispositif comprend un module d'apprentissage (30) pour modifier des poids synaptiques du modèle de prédiction via une rétropropagation pour le calcul du gradient de chaque poids suivant une fonction de coût dépendant de la grandeur.

FIG.2

EP 4 322 061 A1

**Description**

La présente invention concerne un dispositif électronique de traitement de donnée(s) et un procédé de traitement de donnée(s) mis en oeuvre par un tel dispositif électronique de traitement.

L'invention concerne aussi un système électronique comprenant un capteur, tel qu'un capteur d'image(s), un capteur sonore ou encore un capteur de détection d'objets, tel qu'un radar ou lidar, et un tel dispositif électronique de traitement, chaque donnée à traiter est un élément présent dans une scène captée par le capteur, tel qu'un objet détecté dans une image.

L'invention concerne également un programme d'ordinateur comportant des instructions logicielles qui, lorsqu'elles sont exécutées par un ordinateur, mettent en oeuvre un tel procédé de traitement.

L'invention concerne alors le domaine de l'apprentissage automatique, en particulier celui de l'apprentissage profond (de l'anglais *deep learning*), notamment l'apprentissage continu à base de réseaux de neurones.

Par réseau de neurones, on entend un réseau de neurones artificiels (de l'anglais *artificial neural network*) connu en soi.

L'invention concerne de multiples applications, parmi lesquelles le traitement automatique de données, l'aide au diagnostic, l'analyse prédictive, les véhicules autonomes, la bioinformatique ou la surveillance. Ces applications impliquent typiquement la classification ou l'identification d'objets ou de signaux préalablement détectés par un capteur, permettant par exemple de reconnaître ou classer les identités de personnes dont le visage a été détecté par un détecteur de visages, ou encore de reconnaître ou de classer des objets environnants détectés par un capteur embarqué à bord d'un véhicule autonome, la reconnaissance ou encore la classification de tels objets étant importante pour la conduite autonome d'un tel véhicule.

L'invention concerne encore des applications dans le domaine de la surveillance acoustique via au moins un capteur acoustique, ou de la surveillance sismique via un capteur de vibrations provenant du sol, ou encore de l'aide au pilotage d'équipement(s) industriel(s), tel(s) qu'une pompe à chaleur, via au moins un capteur dédié.

Pour les multiples applications précitées, il est connu d'utiliser des algorithmes d'apprentissage automatique faisant partie de programmes pouvant être exécutés sur des processeurs, tels que les CPU (de l'anglais *Central Processing Unit*) ou les GPU (de l'anglais *Graphics Processing Unit*).

Parmi les techniques de mise en oeuvre d'apprentissage, l'emploi de réseaux de neurones, c'est-à-dire des réseaux de neurones artificiels, ou ANN (de l'anglais *Artificial Neural Network*) connus en soi, est de plus en plus répandu, ces structures étant considérées comme très prometteuses du fait de leurs performances pour de nombreuses tâches telles que la classification automatique de données, la reconnaissance de motifs, la traduction et la compréhension automatique de langues, le contrôle robotique, la navigation automatique, les systèmes de recommandations, la détection d'anomalies, la détection de fraudes, l'étude de l'ADN ou encore la découverte de nouvelles molécules.

Un réseau de neurones est généralement composé d'une succession de couches de neurones dont chacune prend ses entrées sur les sorties de la couche précédente. Plus précisément, chaque couche comprend des neurones prenant leurs entrées sur les sorties des neurones de la couche précédente. L'homme du métier observera que pour certains réseaux de neurones, certaines couches prennent leurs entrées sur les sorties de couches précédentes qui ne sont pas immédiatement adjacentes. Chaque couche est reliée par une pluralité de synapses. Un poids synaptique est associé à chaque synapse. C'est un nombre, tel qu'un nombre réel ou binaire, ou encore une distribution, qui prend des valeurs positives comme négatives. Dans le cas d'une couche dense, l'entrée d'un neurone est la somme pondérée des sorties des neurones de la couche précédente, la pondération étant faite par les poids synaptiques et suivie d'une activation via une fonction d'activation. Comme connu en soi, le fonctionnement du réseau de neurones est un peu différent dans le cas de couches convolutionnelles, récurrentes, à attention, etc.

L'article « Tocards Reducing Labeling Cost in Deep Object Détection »de I. Elezi et al publié en 2021 rappelle que les réseaux de neurones profonds ont atteint une certaine précision dans la détection d'objets, mais que leur efficacité repose sur de grandes quantités de données étiquetées.

Cet article propose alors un procédé de traitement de donnée(s) mettant en oeuvre un apprentissage actif permettant de réduire la dépendance aux étiquettes (de l'anglais *label*), tout en étant capable de pseudo-étiqueter les prédictions très fiables.

Cependant, un procédé de traitement est parfois biaisé par les classes les plus performantes et les prédictions les plus fiables, ce qui nuit à la précision du traitement.

Le but de l'invention est alors de proposer un dispositif électronique de traitement de données, et un procédé de traitement associé, permettant de mieux s'adapter à de nouvelles données à traiter.

A cet effet, l'invention a pour objet un dispositif électronique de traitement de donnée(s), le dispositif étant destiné à être connecté à un capteur, et comprenant :

- un module d'acquisition apte à être connecté au capteur, et configuré pour acquérir une donnée ;
- un module d'estimation configuré pour estimer une tâche associée à la donnée, via l'inférence d'un modèle de prédiction ;
- un ensemble de modèle(s) d'intelligence artificielle, ledit ensemble comportant le modèle de prédiction ; et
- un module de détermination configuré pour déterminer une tâche résultante pour la donnée ;

le module de détermination étant configuré pour calculer une grandeur représentative de l'estimation ; puis pour sélectionner, en fonction de la grandeur calculée, un mode de détermination parmi un mode assisté de détermination et plusieurs modes supervisés de détermination ; et pour déterminer, suivant le mode de détermination sélectionné, la tâche résultante ;
en mode assisté de détermination, le module de détermination étant configuré pour envoyer à un utilisateur une requête en fourniture d'une tâche pour la donnée, et la tâche déterminée étant alors la tâche fournie par l'utilisateur ; et chaque mode supervisé de détermination étant dépourvu d'envoi de requête à l'utilisateur, et le dispositif comprenant en outre un module d'apprentissage configuré pour modifier des poids synaptiques du modèle de prédiction en utilisant un algorithme de rétropropagation pour le calcul du gradient de chaque poids synaptique suivant une fonction de coût, la fonction de coût dépendant de la grandeur calculée.

Le dispositif électronique de traitement selon l'invention permet alors de déterminer de manière plus fiable la tâche résultante, telle que l'identification d'une classe associée à la donnée, notamment afin de remédier à un biais lorsque le modèle d'intelligence artificielle prédit davantage une classe qu'une autre, et/ou à un problème de fiabilité des identifiants en cas de modèle imparfait, et/ou à un problème d'oubli catastrophique si le modèle ne dispose pas de toutes les données classées précédemment.

En outre, l'apprentissage actif (de l'anglais *active learning*) de l'état de la technique nécessite que le modèle soit aléatoirement réinitialisé à un état initial chaque fois que de nouvelles données étiquetées sont reçues, et également que toutes les données classées précédemment soient toujours disponibles. De plus, avec l'apprentissage actif de l'état de la technique, les données sont classées par lots en fonction de l'incertitude ou de la diversité, et le modèle est réinitialisé/mis à jour périodiquement ce qui est pénalisant car cela implique alors de refaire un apprentissage localement ou de recevoir des paramètres d'un serveur.

Avec le dispositif de traitement selon l'invention, l'apprentissage se fait régulièrement pendant que le dispositif est en cours d'utilisation. Le dispositif de traitement selon l'invention permet alors un apprentissage local, au plus près du capteur, et permettant de tenir compte de l'évolution des données issues du capteur.

Suivant d'autres aspects avantageux de l'invention, le dispositif électronique de traitement comprend une ou plusieurs des caractéristiques suivantes, prises isolément ou suivant toutes les combinaisons techniquement possibles :

- le module de détermination est configuré pour sélectionner le mode de détermination via une comparaison de la grandeur calculée avec au moins un seuil ;
le mode assisté de détermination étant de préférence sélectionné via la comparaison de ladite grandeur avec un premier seuil ;
- les modes supervisés de détermination incluent un mode semi-supervisé de détermination et un mode auto-supervisé de détermination ;

en mode semi-supervisé de détermination, le module de détermination étant de préférence configuré pour déterminer la tâche résultante à partir de la tâche prédite ;
en mode auto-supervisé de détermination, le module de détermination étant de préférence configuré pour déterminer une tâche additionnelle, en appliquant une transformation prétexte à la donnée acquise, la tâche additionnelle étant alors obtenue via l'inférence d'un modèle prétexte sur la donnée transformée, le modèle prétexte étant un modèle d'intelligence artificielle inclus dans l'ensemble de modèle(s) d'intelligence artificielle ;

- le module de détermination est configuré pour sélectionner le mode semi-supervisé de détermination via la comparaison de la grandeur calculée avec un deuxième seuil, le deuxième seuil étant distinct du premier seuil ;
- le module d'apprentissage est configuré pour modifier les poids synaptiques suivant une première fonction de coût si le mode de détermination sélectionné est le mode assisté de détermination ou le mode semi-supervisé de détermination ; et respectivement suivant une deuxième fonction de coût distincte de la première fonction de coût si le mode de détermination sélectionné est le mode auto-supervisé de détermination ;
- la grandeur est une grandeur représentative d'un défaut de l'estimation ;

la grandeur étant de préférence une incertitude de prédiction calculée via le modèle de prédiction ;
l'ensemble de modèle(s) d'intelligence artificielle comportant de préférence en outre un modèle de détection d'anomalie ;
la grandeur étant de préférence encore un coefficient d'anomalie calculé via le modèle de détection d'anomalie ;

la grandeur étant de préférence encore une combinaison de l'incertitude de prédiction calculée via le modèle de prédiction et du coefficient d'anomalie calculé via le modèle de détection d'anomalie ;

- le module de détermination est configuré pour sélectionner le mode assisté de détermination si la grandeur calculée est supérieure au premier seuil ; pour sélectionner le mode semi-supervisé de détermination si ladite grandeur est inférieure au deuxième seuil, le deuxième seuil étant distinct du premier seuil ; et pour sélectionner le mode auto-supervisé de détermination si ladite grandeur est comprise entre le deuxième seuil et le premier seuil ;
- le dispositif comprend en outre une mémoire tampon, et le module d'apprentissage est connecté à la mémoire tampon, et configuré en outre pour stocker, suivant une règle de stockage et dans la mémoire tampon, la donnée et la tâche déterminée associée, issues du module de détermination ;

  la règle de stockage étant de préférence choisie parmi le groupe consistant en : une règle en fonction d'une probabilité de chaque type de tâche ; une règle en fonction de type(s) de tâche(s) déjà stocké(s) en mémoire tampon ; une règle en fonction d'une pertinence de chaque type de tâche ; une règle en fonction d'une priorité de chaque type de tâche ; une règle en fonction d'une pertinence de chaque donnée ; et une règle aléatoire.
  la mémoire tampon comportant de préférence une première zone pour le stockage de tâche(s) déterminée(s) suivant le mode assisté de détermination et de donnée(s) associée(s), et une deuxième zone pour le stockage de tâche(s) déterminée(s) suivant le mode semi-supervisé de détermination et de donnée(s) associée(s), la deuxième zone étant distincte de la première ; et
  lors du stockage dans la mémoire tampon de nouvelle(s) donnée(s) et tâche(s) associée(s), le module d'apprentissage étant de préférence en outre configuré pour effacer, selon une règle de mise à jour, une ou plusieurs données et tâches préalablement stockées ;

- le module d'acquisition est connecté à la mémoire tampon, et est configuré en outre pour acquérir la donnée depuis une source choisie, selon une règle de choix, parmi le capteur et la mémoire tampon ;

  la règle de choix étant de préférence une règle aléatoire ;
  la source étant de préférence choisie parmi le capteur et chacune des zones distinctes séparément, lorsque la mémoire tampon comporte plusieurs zones distinctes ;

- au moins un module parmi le module d'apprentissage et le module d'acquisition est configuré en outre pour générer des donnée(s) et tâche(s) additionnelle(s) en appliquant une opération de transformation à des donnée(s) et tâche(s) stockée(s) ou à stocker dans la mémoire tampon ;
  l'opération de transformation étant de préférence choisie parmi le groupe consistant en : une opération de floutage, une opération de changement de couleur, une opération de recadrage, et une opération de remise à l'échelle, une opération de fenêtrage temporel, une opération d'ajout de bruit, une opération de dilatation, et une opération de contraction.
- le module d'apprentissage est configuré en outre pour compresser la donnée et la tâche issues du module de détermination, puis pour stocker la donnée et la tâche compressées dans la mémoire tampon ; et le module d'acquisition est alors configuré pour décompresser lesdites donnée et tâche compressées, avant transmission au module d'estimation ;
- le module d'apprentissage comprend en outre une unité d'apprentissage incrémental configurée pour créer un ensemble de pseudo-exemple(s), puis pour mettre en oeuvre un apprentissage continu du module d'estimation en réinjectant l'ensemble de pseudo-exemple(s) en entrée dudit module d'estimation ;
- le dispositif comprend en outre une mémoire de stockage de paramètres du modèle de prédiction si le mode de détermination sélectionné est le mode assisté de détermination, pour une modification ultérieure des paramètres dudit modèle de prédiction après réception de la tâche fournie par l'utilisateur ;
  les paramètres stockés étant de préférence les poids synaptiques et des fonctions d'activation dudit modèle de prédiction ;
- le traitement est une classification de la donnée, et la tâche est une classe attribuée à la donnée ; et
- le dispositif est réalisé sous forme d'une puce électronique.

L'invention a également pour objet un système électronique comprenant un capteur, tel qu'un capteur d'image(s), un capteur sonore ou encore un capteur de détection d'objets, et un dispositif électronique de traitement de donnée(s) connecté au capteur, le dispositif électronique de traitement étant tel que défini ci-dessus, et au moins une donnée à traiter est un élément présent dans une scène captée par le capteur, tel qu'un objet détecté dans une image.
L'invention a aussi pour objet un procédé de traitement de donnée(s), le procédé étant mis en oeuvre par un dispositif électronique de traitement destiné à être connecté à un capteur et comportant un ensemble de modèle(s) d'intelligence artificielle, le procédé comprenant les étapes suivantes :

- acquisition d'une donnée correspondant à un signal issu du capteur ;
- estimation d'une tâche associée à la donnée, via l'inférence d'un modèle de prédiction inclus dans l'ensemble de modèle(s) d'intelligence artificielle ; et
- détermination d'une tâche résultante pour la donnée ;

l'étape de détermination comportant en outre le calcul d'une grandeur représentative de l'estimation ; puis la sélection, en fonction de la grandeur calculée, d'un mode de détermination parmi un mode assisté de détermination et plusieurs modes supervisés de détermination ; et la détermination, suivant le mode de détermination sélectionné, de la tâche résultante ;

le mode assisté de détermination comportant un envoi à un utilisateur d'une requête en fourniture d'une tâche pour la donnée, et la tâche déterminée étant alors la tâche fournie par l'utilisateur ; et

chaque mode supervisé de détermination étant dépourvu d'envoi de requête à l'utilisateur, et

le procédé comprenant en outre une étape d'apprentissage comportant une modification des poids synaptiques du modèle de prédiction en utilisant un algorithme de rétropropagation pour le calcul du gradient de chaque poids synaptique suivant une fonction de coût, la fonction de coût dépendant de la grandeur calculée.

L'invention a également pour objet un programme d'ordinateur comportant des instructions logicielles qui, lorsqu'elles sont exécutées par un ordinateur, mettent en oeuvre un procédé de traitement, tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un système électronique selon l'invention, comprenant un capteur et un dispositif électronique de traitement de données connecté au capteur, le dispositif de traitement comportant un module d'acquisition d'au moins une donnée ; un module d'estimation d'une tâche associée à la donnée via l'inférence d'un modèle respectif d'intelligence artificielle ; un module de détermination d'une tâche résultante pour la donnée ; et un module d'apprentissage du modèle respectif d'intelligence artificielle ;
- la figure 2 est un synoptique schématique du système électronique de la figure 1, selon un premier mode de réalisation de l'invention ;
- la figure 3 est un organigramme d'un procédé de traitement de donnée(s) selon l'invention, le procédé étant mis en oeuvre par le dispositif électronique de traitement de la figure 1 ; et
- la figure 4 est une vue illustrant des résultats obtenus avec le système électronique de la figure 1 ;
- la figure 5 est une vue analogue à celle de la figure 2, selon un deuxième mode de réalisation de l'invention ; et
- la figure 6 est une vue analogue à celle de la figure 2, selon un troisième mode de réalisation de l'invention.

Dans la présente description, les termes « apprentissage » (de l'anglais *learning*) et « entraînement » (de l'anglais *training*) sont considérés comme équivalents, c'est-à-dire qu'ils ont la même signification, et sont alors employés de manière interchangeable.

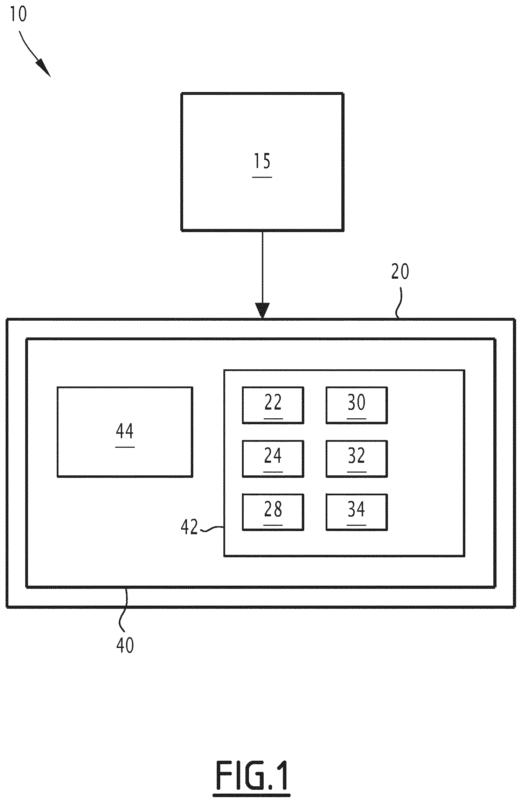

Sur la figure 1, un système électronique 10 comprend un capteur 15 et un dispositif électronique de traitement 20 connecté au capteur 15, le dispositif de traitement 20 étant configuré pour traiter au moins une donnée issue du capteur 15, la donnée à traiter étant alors un élément présent dans une scène captée par le capteur 15.

Le système électronique 10 est par exemple un système électronique de détection d'objet(s), le capteur 15 étant alors un détecteur d'objet(s) et le dispositif de traitement 20 étant configuré pour traiter au moins une donnée relative à l'objet détecté par le détecteur d'objet(s).

Le système électronique 10 forme par exemple un détecteur de visages apte à reconnaitre les visages de personnes préalablement identifiées et/ou à détecter des visages de personnes inconnues, c'est-à-dire des visages de personnes qui n'ont pas été préalablement identifiées. Le dispositif de traitement 20 permet alors d'apprendre les identités des personnes détectées, et aussi d'identifier des personnes inconnues.

Le système électronique 10 est également apte à reconnaître des objets dans l'environnement d'un véhicule automobile, lorsqu'il est embarqué à bord d'un tel véhicule, en particulier un véhicule autonome. Le dispositif de traitement 20 permet alors de traiter de tels objets, et en particulier de les classer par type, afin de faciliter le pilotage du véhicule autonome. Le système électronique 10 est par exemple un système de détection de piéton(s), embarqué à bord d'un véhicule automobile, et susceptible de circuler dans un pays ou sur un type de route différent de celui d'un dispositif d'entraînement d'un algorithme d'intelligence artificielle mis en oeuvre par le dispositif de traitement 20.

En variante, le système électronique 10 est un système électronique de segmentation d'image(s), le capteur 15 étant alors un capteur d'image(s) et le dispositif de traitement 20 étant configuré pour effectuer une segmentation de chaque image issue du capteur d'image(s).

En variante encore, le système électronique 10 est un système électronique de surveillance acoustique ou sismique, et le capteur 15 est typiquement un capteur acoustique ou un capteur de vibrations. Le système électronique de surveillance est en particulier destiné à être installé en des lieux géographiques où la bande passante de communication est fortement limitée, par exemple pour une surveillance d'une installation éolienne offshore, une surveillance spatiale, une surveillance de zones éloignées (forêts, zones sous-marines, volcans, rivières, etc.).

En variante encore, le système électronique 10 est un système électronique d'aide au pilotage d'équipement(s) industriel(s), tel(s) qu'une pompe à chaleur, via au moins un capteur dédié. Le système d'aide au pilotage permet alors en particulier un pilotage local de l'équipement industriel, tel que la pompe à chaleur, pour mieux s'adapter à un environnement local, par exemple aux habitudes de vie d'une famille vivant dans une résidence équipée de la pompe à chaleur.

L'homme du métier comprendra plus généralement que le système électronique 10 selon l'invention est un système électronique comprenant tout type de capteur 15 et le dispositif électronique de traitement 20 connecté audit capteur 15, dans lequel le dispositif de traitement 20 est configuré pour déterminer une tâche résultante Y* pour l'au moins une donnée issue du capteur 15.

Le système électronique 10 selon l'invention est de préférence un système électronique embarqué, tel qu'un système électronique embarqué à bord d'un véhicule ou un système électronique équipant un utilisateur, pour lequel il est plus complexe d'effectuer un apprentissage en continu de l'algorithme d'intelligence artificielle mis en oeuvre par le dispositif de traitement 20.

Le traitement effectué par le dispositif de traitement 20 est par exemple une classification de la donnée, et la tâche est alors une classe attribuée à la donnée.

En variante, le traitement effectué par le dispositif de traitement 20 est une détection, et la tâche est alors une fenêtre de délimitation (de l'anglais *bounding box*) attribuée à la donnée lorsque la donnée est une image, ou plus généralement une plage détectée de valeurs lorsque la donnée est un signal. Dans le cas d'une fenêtre de délimitation, à chaque fenêtre déterminée, sont associés des coordonnées, une taille et une distribution de classe définissant ce qui se trouve à l'intérieur de la fenêtre.

En variante ou en complément, le traitement effectué par le dispositif de traitement 20 est une segmentation, et la tâche consiste à attribuer une classe sémantique à chaque cellule d'une matrice, c'est-à-dire à un pixel dans une image ou un échantillon dans un signal analogique. L'homme du métier comprendra que la segmentation est similaire à la détection, à la différence que la tâche associée est un pixel ou une valeur, plutôt qu'une fenêtre ou une plage de valeurs.

En variante encore, le traitement effectué par le dispositif de traitement 20 est une tâche de prédiction, de reconstruction, de génération. L'homme du métier comprendra ainsi que plus généralement toute tâche standard d'apprentissage automatique, également appelé apprentissage machine, peut être adaptée pour fonctionner avec l'invention.

Le capteur 15 est connu en soi. Le capteur 15 est par exemple un capteur d'image(s) configuré pour prendre une ou plusieurs images d'une scène, et les transmettre au dispositif de traitement 20.

En variante, le capteur 15 est un capteur sonore, un capteur de détection d'objets, tel qu'un capteur lidar, un capteur radar, un capteur infrarouge, un capteur de proximité capacitif, un capteur de proximité inductif, un capteur de proximité à effet Hall ou encore un capteur de présence, configuré pour acquérir un signal caractéristique en fonction de la présence ou de l'absence d'objet(s), puis pour le transmettre au dispositif de traitement 20.

En variante encore, le capteur 15 est un capteur acoustique ou un capteur de vibrations, tel qu'un capteur de vibrations provenant du sol.

En variante encore, le capteur 15 est un capteur de température ou un capteur de présence lorsque le système électronique 10 est un système d'aide au pilotage d'une pompe à chaleur.

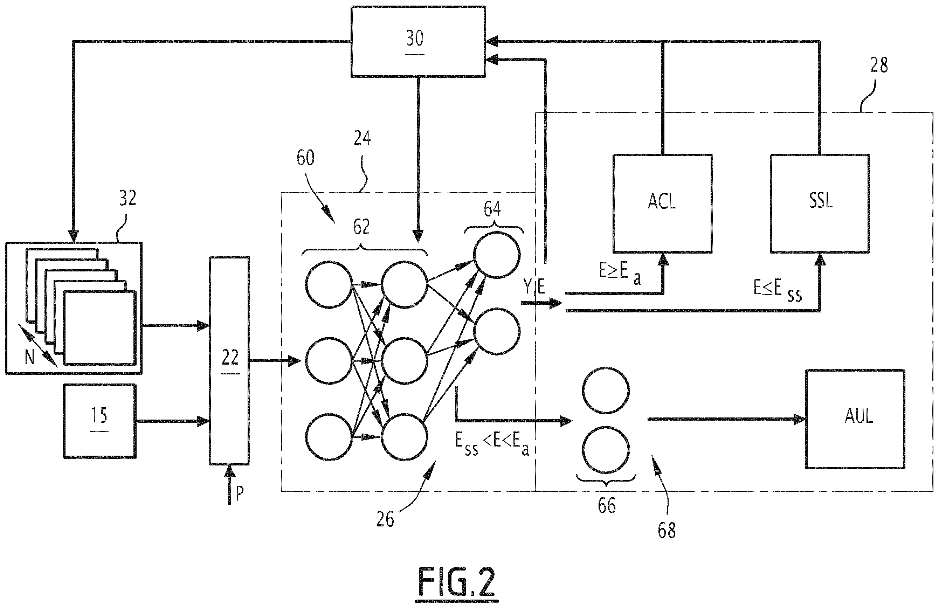

Le dispositif de traitement 20 comprend un module 22 d'acquisition d'au moins une donnée, un module 24 d'estimation d'une tâche associée à la donnée via l'inférence d'un modèle respectif d'un ensemble 26 de modèle(s) d'intelligence artificielle, visible à la figure 2 ; un module 28 de détermination de la tâche résultante Y* pour la donnée ; et un module 30 d'apprentissage du modèle respectif d'intelligence artificielle.

Dans les exemples des figures 1 et 2, le dispositif de traitement 20 comprend en outre une mémoire tampon 32, et le module d'apprentissage 30 est connecté à la mémoire tampon 32, pour y stocker, suivant une règle de stockage, la donnée et la tâche déterminée associée, issues du module de détermination 28.

En complément facultatif, le dispositif de traitement 20 comprend en outre une mémoire 34 de stockage de paramètres du modèle respectif d'intelligence artificielle, pour une modification ultérieure des poids synaptiques dudit modèle d'intelligence artificielle après réception d'une tâche fournie par l'utilisateur.

Le dispositif électronique de traitement 20 est par exemple en forme d'un calculateur ou d'une puce électronique.

Dans l'exemple de la figure 1, le dispositif électronique de traitement 20 comprend une unité de traitement d'informations 40 formée par exemple d'une mémoire 42 et d'un processeur 44 associé à la mémoire 42.

Dans l'exemple de la figure 1, le module d'acquisition 22, le module d'estimation 24, le module de détermination 28 et le module d'apprentissage 30 sont réalisés chacun sous forme d'un logiciel, ou d'une brique logicielle, exécutable par le processeur 44. La mémoire 42 du dispositif électronique de traitement 20 est alors apte à stocker un logiciel d'acquisition de la donnée à traiter, un logiciel d'estimation d'une tâche associée à la donnée via l'inférence du modèle respectif d'un ensemble 26 de modèle(s) d'intelligence artificielle, un logiciel de détermination de la tâche résultante Y* pour la donnée et un logiciel d'apprentissage du modèle respectif d'intelligence artificielle. Le processeur 44 est alors apte à exécuter chacun des logiciels parmi le logiciel d'acquisition, le logiciel d'estimation, le logiciel de détermination et le logiciel d'apprentissage.

En variante, non représentée, le module d'acquisition 22, le module d'estimation 24, le module de détermination 28 et le module d'apprentissage 30 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Lorsque le dispositif électronique de traitement 20 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module d'acquisition 22 est configuré pour acquérir la ou chaque donnée.

Le module d'acquisition 22 est notamment configuré pour acquérir la ou chaque donnée issue du capteur 15, correspondant à un objet préalablement capté par ledit capteur 15. Autrement dit, chaque donnée acquise correspond alors à un signal capté par le capteur 15.

En complément facultatif, le module d'acquisition 22 est connecté à la mémoire tampon 32, et est configuré en outre pour acquérir la donnée depuis une source choisie, selon une règle de choix, parmi le capteur 15 et la mémoire tampon 32. Lorsqu'en complément facultatif encore, la mémoire tampon 32 comporte plusieurs zones distinctes 50, 52, 54, la source est de préférence choisie parmi le capteur 15 et séparément chacune des zones distinctes 50, 52, 54.

La règle de choix est par exemple une règle aléatoire. Le module d'acquisition 22 est par exemple configuré pour générer, à chaque acquisition, un nombre aléatoire ou pseudo-aléatoire, puis comparer le nombre ainsi généré à un seuil P de valeur paramétrable, et acquérir la donnée depuis le capteur 15 si le nombre aléatoire ou pseudo aléatoire généré est supérieur au seuil P, et depuis la mémoire tampon 32 sinon, c'est-à-dire si ledit nombre généré est inférieur ou égal au seuil P.

Le nombre aléatoire ou pseudo-aléatoire est de préférence généré de manière uniforme et compris entre 0 et 1, et le seuil P représente alors la probabilité que la donnée soit acquise depuis la mémoire tampon 32.

Lorsqu'en complément facultatif encore, la mémoire tampon 32 comporte plusieurs zones distinctes 50, 52, 54, un seul respectif $P_i$ est associé de manière distincte à chaque zone 50, 52, 54 respective, où i est un indice entier compris entre 1 et M, M représentant le nombre de zones distinctes 50, 52, 54. Le module d'acquisition 22 est alors configuré pour choisir la source parmi le capteur 15 et chacune des zones distinctes 50, 52, 54 depuis laquelle acquérir la donnée, en comparant le nombre généré avec lesdits seuils $P_i$.

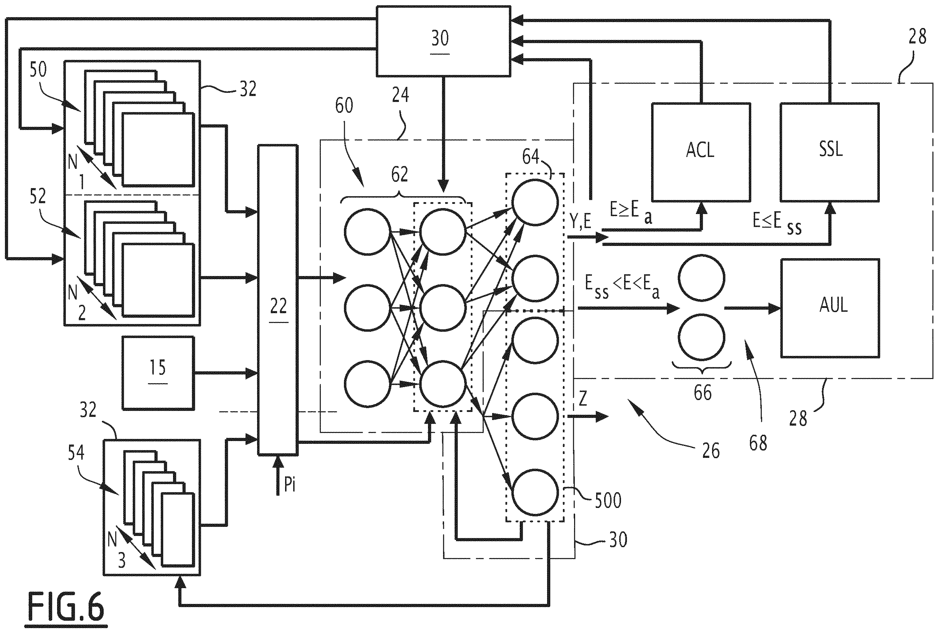

Dans l'exemple de la figure 6, la mémoire tampon 32 comporte une première zone 50, une deuxième zone 52 et une troisième zone 54, avec un premier seuil P1 associé à la première zone 50, un deuxième seuil P2 associé à la deuxième zone 52 et un troisième seuil P3 associé à la troisième zone 54, le troisième seuil P3 étant supérieur au deuxième seuil P2 lui-même supérieur au premier seuil P1. Selon cet exemple, le module d'acquisition 22 est alors configuré pour acquérir la donnée depuis la première zone 50 si le nombre généré est inférieur ou égal au premier seuil P1 ; depuis la deuxième zone 52 si ledit nombre généré est supérieur au premier seuil P1 et inférieur ou égal au deuxième seuil P2 ; depuis la troisième zone 54 si ledit nombre généré est supérieur au deuxième seuil P2 et inférieur ou égal au troisième seuil P3 ; et depuis le capteur 15 si ledit nombre généré est supérieur au troisième seuil P3. L'homme du métier comprendra que le troisième seuil P3 correspond alors au seuil P défini ci-dessus.

Le module d'estimation 24 est configuré pour estimer une tâche Y associée à la donnée, via l'inférence d'un modèle de prédiction 60, le modèle de prédiction 60 étant un modèle d'intelligence artificielle inclus dans l'ensemble 26 de modèle(s) d'intelligence artificielle.

Le module d'estimation 24 est alors configuré pour mettre en oeuvre le modèle de prédiction 60, et l'appliquer à la donnée acquise par le module d'acquisition 22, et fournir en sortie la tâche estimée Y, également appelée prédiction Y ou encore vecteur de prédiction Y, produite par le modèle de prédiction 60. La tâche Y est par exemple en forme d'un vecteur de probabilités de classe ou d'une liste de fenêtres de délimitation dans le cas d'un traitement de classification ou de détection appliqué à une image.

L'ensemble 26 de modèle(s) d'intelligence artificielle comporte le modèle de prédiction 60. Le modèle de prédiction 60 inclut typiquement au moins un réseau neuronal, c'est-à-dire un réseau de neurones artificiels, également appelé réseaux de neurones. Le modèle de prédiction 60 est par exemple un réseau neuronal déterministe, un réseau neuronal bayésien, ou encore un ensemble de réseaux neuronaux, chacun généralement de type déterministe ou bayésien. Lorsque le modèle de prédiction 60 est un ensemble de réseaux neuronaux, chaque réseau neuronal a une entrée respective recevant une donnée respective parmi les données acquises par le module d'acquisition 22. Dans l'exemple de la figure 2, le modèle de prédiction 60 comporte un noyau 62 (de l'anglais *backbone*), souvent appelée extracteur de caractéristiques (de l'anglais *feature extractor*), et une unité de prédiction 64 (de l'anglais *prédiction head*) apte à fournir, par exemple, une distribution de classe prédite concernant les données. Le ou les modèles d'intelligence artificielle peuvent également être développés par des méthodes classiques d'apprentissage machine (de l'anglais *machine learning*), au-delà des réseaux de neurones.

En complément facultatif, l'ensemble 26 de modèle(s) d'intelligence artificielle comporte un modèle prétexte 66 inclus dans une unité prétexte 68 (de l'anglais *pretext head*). L'unité prétexte 68 est adaptée pour déterminer une tâche additionnelle, en appliquant une transformation prétexte à la donnée acquise, la tâche additionnelle étant alors obtenue via l'inférence du modèle prétexte 66 sur la donnée transformée. Le modèle prétexte 66 est un modèle d'intelligence artificielle inclus dans l'ensemble 26 de modèle(s) d'intelligence artificielle. Le modèle prétexte 66 comporte par exemple plusieurs couches de rétroaction (de l'anglais *feed-forward*) avec une couche de sortie finale à plusieurs neurones.

Le module de détermination 28 est configuré pour déterminer la tâche résultante Y* pour la donnée, en calculant une grandeur représentative de l'estimation, puis en sélectionnant - en fonction de la grandeur calculée - un mode de détermination parmi un mode assisté de détermination ACL et plusieurs modes supervisés de détermination SSL, AUL, et en déterminant alors la tâche résultante Y* suivant le mode de détermination sélectionné.

En mode assisté de détermination ACL (de l'anglais *Active Label,* ou encore *Active Labelling*), le module de détermination 28 est configuré en outre pour envoyer à un utilisateur une requête en fourniture d'une tâche pour la donnée, et la tâche déterminée est alors la tâche fournie par l'utilisateur.

Chaque mode supervisé de détermination SSL, AUL est dépourvu d'envoi de requête à l'utilisateur. Les modes supervisés de détermination incluent par exemple un mode semi-supervisé de détermination SSL et un mode auto-supervisé de détermination AUL.

En mode semi-supervisé de détermination SSL (de l'anglais *Semi-Supervised Label*, ou encore *Semi-Supervised Labelling*), le module de détermination 28 est configuré pour déterminer la tâche résultante Y* à partir de la tâche prédite.

En mode auto-supervisé de détermination AUL (de l'anglais *Self-Supervised Label*, ou encore *Self-Supervised Labelling*), le module de détermination 28 est configuré pour déterminer la tâche additionnelle, par exemple via l'unité prétexte 68 en appliquant la transformation prétexte à la donnée acquise, la tâche additionnelle étant alors obtenue via l'inférence du modèle prétexte 66 sur la donnée transformée.

Le module de détermination 28 est typiquement configuré pour sélectionner le mode de détermination via une comparaison de la grandeur calculée avec au moins un seuil. Ce seuil est adaptable en cours de fonctionnement, par exemple en utilisant une moyenne courante d'un percentile des incertitudes de sortie, et en prenant - encore par exemple - le 10ème percentile comme seuil pour le mode assisté de détermination ACL et le 80ème percentile comme seuil pour le mode semi-supervisé de détermination SSL.

Le mode assisté de détermination ACL est par exemple sélectionné via la comparaison de ladite grandeur avec un premier seuil.

En complément, le module de détermination 28 est configuré pour sélectionner le mode semi-supervisé de détermination SSL via la comparaison de la grandeur calculée avec un deuxième seuil, le deuxième seuil étant distinct du premier seuil.

Le module de détermination 28 est par exemple configuré pour sélectionner le mode assisté de détermination ACL si la grandeur calculée est supérieure ou égale au premier seuil ; pour sélectionner le mode semi-supervisé de détermination SSL si ladite grandeur est inférieure ou égale au deuxième seuil, le deuxième seuil étant distinct du premier seuil ; et pour sélectionner le mode auto-supervisé de détermination AUL si ladite grandeur est strictement comprise entre le deuxième seuil et le premier seuil.

La grandeur est une grandeur représentative d'un défaut de l'estimation.

Dans l'exemple de la figure 2, la grandeur est une incertitude de prédiction E calculée via le modèle de prédiction 60, typiquement par l'unité de prédiction 64. Le premier seuil associé à l'incertitude de prédiction E est alors noté $E_a$, et en complément le deuxième seuil associé à l'incertitude de prédiction E est noté $E_{ss}$.

Lorsque le modèle de prédiction 60 est un réseau neuronal déterministe, l'incertitude de prédiction E est par exemple une entropie, telle que l'entropie de la distribution de la tâche, i.e. l'entropie de la distribution de la classe lorsque le traitement est une classification. La distribution de classe est également appelée distribution catégorielle.

L'incertitude de prédiction E vérifie alors par exemple l'équation suivante :

[1]

$$E = \sum_{y_i \in Y} p(y_i) . \log\big(p(y_i)\big)$$

où E représente l'incertitude de prédiction,
Y représente le vecteur de prédiction, comportant des prédictions unitaires $y_i$,
$p(y_i)$ représente la probabilité de chaque prédiction unitaire $y_i$, et
log représente la fonction de logarithme.

En variante, l'incertitude de prédiction E est égale à une différence entre les deux tâches les plus probables.
Lorsque le modèle de prédiction 60 est un réseau neuronal bayésien, l'incertitude de prédiction E est par exemple la variance de l'argument du maximum du vecteur de prédiction Y, et vérifie alors typiquement l'équation suivante :

[2]

$$E = V[Argmax(Y)]$$

où E représente l'incertitude de prédiction,
Y représente le vecteur de prédiction,
V représente la variance, et
Argmax représente la fonction argument du maximum, également notée Arg max.

Lorsque le modèle de prédiction 60 est un réseau neuronal bayésien, l'incertitude de prédiction E est en variante l'écart-type de cette distribution, plutôt que la variance de cette distribution, et vérifie alors l'équation suivante :

[3]

$$E = \sigma[Argmax(Y)]$$

où E représente l'incertitude de prédiction,
Y représente le vecteur de prédiction,
σ représente l'écart-type, c'est-à-dire la racine carrée de la variance V, et
Argmax représente la fonction argument du maximum, également notée Arg max.

Lorsque le modèle de prédiction 60 est un réseau neuronal bayésien, l'incertitude de prédiction E est en variante encore une entropie, par exemple en utilisant le vecteur de sortie moyen et en prenant l'entropie de ce vecteur.
Lorsque le modèle de prédiction 60 est un ensemble de réseaux neuronaux, l'incertitude de prédiction E est par exemple l'écart-type moyen sur toutes les tâches, et pas seulement sur l'argument du maximum des tâches.
Lorsque le modèle de prédiction 60 est un réseau neuronal bayésien, il permet d'obtenir une valeur plus fiable de l'incertitude de prédiction E en utilisant, par exemple, l'entropie prédictive sur un certain nombre d'intégrations de Monte Carlo et en prenant le vecteur de prédiction Y comme moyenne sur les intégrations de Monte Carlo.
En variante, lorsque le traitement effectué est une détection, et que la tâche est alors par exemple une fenêtre de délimitation, le module de détermination 28 est par exemple configuré pour calculer une incertitude élémentaire pour chaque fenêtre de délimitation à partir de la distribution de classe associée à chaque fenêtre, puis pour calculer une incertitude globale pour l'image en utilisant une métrique, telle qu'une moyenne, une somme ou encore un maximum, appliquée à la pluralité d'incertitudes élémentaires.
En variante encore, lorsque le traitement effectué est une segmentation, et que la tâche est alors par exemple un pixel détecté, le module de détermination 28 est de manière analogue configuré pour calculer une incertitude élémentaire pour chaque pixel, puis pour calculer une incertitude globale pour l'image en utilisant la métrique appliquée à la pluralité d'incertitudes élémentaires calculées pour la pluralité de pixel détectés.
Le module d'apprentissage 30 est configuré pour modifier des poids synaptiques du modèle de prédiction 60 en utilisant un algorithme de rétropropagation pour le calcul du gradient de chaque poids synaptique suivant une fonction de coût, la fonction de coût dépendant de la grandeur calculée. La fonction de coût est également appelée perte (de l'anglais *loss*).

Le module d'apprentissage 30 est configuré pour modifier les poids synaptiques suivant une première fonction de coût si le mode de détermination sélectionné est le mode assisté de détermination ACL ou le mode semi-supervisé de détermination SSL ; et respectivement suivant une deuxième fonction de coût distincte de la première fonction de coût si le mode de détermination sélectionné est le mode auto-supervisé de détermination AUL.

Lorsque le module d'apprentissage 30 est configuré en outre pour modifier les poids synaptiques du modèle de prédiction 60 avec une fonction de coût dépendant du mode de détermination sélectionné, le mode de détermination sélectionné forme alors également un apprentissage, en particulier un apprentissage en continu du modèle de prédiction 60. Le mode assisté de détermination ACL est alors également appelé apprentissage assisté, ou encore apprentissage actif (de l'anglais *Active Learning*). De même, le mode semi-supervisé de détermination SSL est également appelé apprentissage semi-supervisé (de l'anglais *Semi-Supervised Learning*), et le mode auto-supervisé de détermination AUL est également appelé apprentissage auto-supervisé (de l'anglais *Self-Supervised Learning*).

Le module d'apprentissage 30 est connecté à la mémoire tampon 32, et configuré en outre pour stocker, suivant une règle de stockage et dans la mémoire tampon 32, la donnée et la tâche déterminée associée, issues du module de détermination 28.

La règle de stockage étant de préférence choisie parmi le groupe consistant en : une règle en fonction d'une probabilité de chaque type de tâche ; une règle en fonction de type(s) de tâche(s) déjà stocké(s) en mémoire tampon 32 ; une règle en fonction d'une pertinence de chaque type de tâche ; une règle en fonction d'une priorité de chaque type de tâche ; une règle en fonction d'une pertinence de chaque donnée ; et une règle aléatoire.

En complément facultatif, la mémoire tampon 32 comporte plusieurs zones 50, 52, 54, notamment la première zone 50 et la deuxième zone 52 décrites précédemment. Selon ce complément facultatif, la première zone 50 est par exemple prévue pour le stockage de tâche(s) déterminée(s) suivant le mode assisté de détermination ACL et de donnée(s) associée(s), et la deuxième zone 52 est prévue pour le stockage de tâche(s) déterminée(s) suivant le mode semi-supervisé de détermination SSL et de donnée(s) associée(s), la deuxième zone 52 étant distincte de la première zone 50.

Lors du stockage dans la mémoire tampon 32 de nouvelle(s) donnée(s) et tâche(s) associée(s), le module d'apprentissage 30 est optionnellement configuré en outre pour effacer, selon une règle de mise à jour, une ou plusieurs données et tâches préalablement stockées.

En complément facultatif, au moins un module parmi le module d'apprentissage 30 et le module d'acquisition 22 est configuré en outre pour générer des donnée(s) et tâche(s) additionnelle(s) en appliquant une opération de transformation à des donnée(s) et tâche(s) stockée(s) ou à stocker dans la mémoire tampon 32. L'opération de transformation est également appelée opération d'augmentation, celle-ci visant à augmenter, c'est-à-dire à enrichir, les données et les tâches avant leur stockage dans la mémoire tampon 32, ou en variante lors de la lecture de la mémoire tampon 32. Cela permet de générer davantage de données dans la mémoire tampon 32 à partir d'un seul exemple issu du module de détermination 28. Lorsqu'en variante les données sont augmentées lors de la lecture de la mémoire tampon 32, cela permet de stocker un plus grand nombre d'échantillons différents dans la mémoire tampon 32, tout en nécessitant alors d'effectuer l'augmentation des données à chaque fois que les données sont lues dans la mémoire tampon 32.

L'opération de transformation est par exemple choisie parmi le groupe consistant en : une opération de floutage, une opération de changement de couleur, une opération de recadrage, et une opération de remise à l'échelle, une opération de fenêtrage temporel, une opération d'ajout de bruit, une opération de dilatation, et une opération de contraction.

L'opération de transformation est effectuée soit avant l'écriture dans la mémoire tampon 32 par le module d'apprentissage 30, soit au moment où les données sont acquises par le module d'acquisition 22. Avantageusement, l'opération de transformation est effectuée par le module d'acquisition 22, et cela permet alors de stocker davantage de données dans la mémoire tampon 32 pour une même quantité de mémoire disponible.

En complément facultatif encore, le module d'apprentissage 30 est configuré en outre pour compresser la donnée et la tâche issues du module de détermination 28, puis pour stocker la donnée et la tâche compressées dans la mémoire tampon 32. Le module d'acquisition 22 est alors configuré pour décompresser lesdites donnée et tâche compressées, avant transmission au module d'estimation 24.

La compression des données, puis leur décompression, est typiquement effectué via une architecture codeur-décodeur (auto-codeur) où le codeur compresse les données en vecteurs qui sont stockés dans la mémoire tampon 32. Le décodeur crée alors les données d'entrée qui doivent ressembler, au bruit près, aux données qui ont été sélectionnées pour être stockées dans la mémoire tampon 32. Cet encodeur automatique est typiquement soit pré-entraîné, soit entraîné en même temps que le modèle de prédiction 60, tout en observant que la fonction de coût est simple à calculer à partir des données avant et après le passage dans l'encodeur automatique.

En complément facultatif, la mémoire de stockage 34 est de préférence configurée pour stocker les paramètres du modèle de prédiction 60 si le mode de détermination sélectionné est le mode assisté de détermination ACL, les paramètres étant ensuite utilisés pour modifier ultérieurement les paramètres dudit modèle, en particulier après réception de la tâche fournie par l'utilisateur. Selon ce complément, les paramètres stockés sont typiquement des poids synaptiques et des fonctions d'activation dudit modèle de prédiction 60.

L'homme du métier comprendra alors que selon ce complément facultatif, l'exécution du dispositif de traitement 20 n'est pas interrompue jusqu'à ce que la tâche soit reçue, c'est-à-dire fournie par l'utilisateur, mais que les états intermédiaires du modèle de prédiction 60 nécessaires à la rétropropagation, en particulier l'activation des neurones, sont stockés dans la mémoire de stockage 34 séparée, et sont ensuite utilisés pour effectuer le calcul de rétropropagation lorsque la tâche est reçue, et que la fonction de coût, ou perte, est alors calculable. L'homme du métier observera également que le seul cas où une requête en fourniture d'une tâche, telle qu'une étiquette, est envoyée à l'utilisateur est celui du mode assisté de détermination ACL.

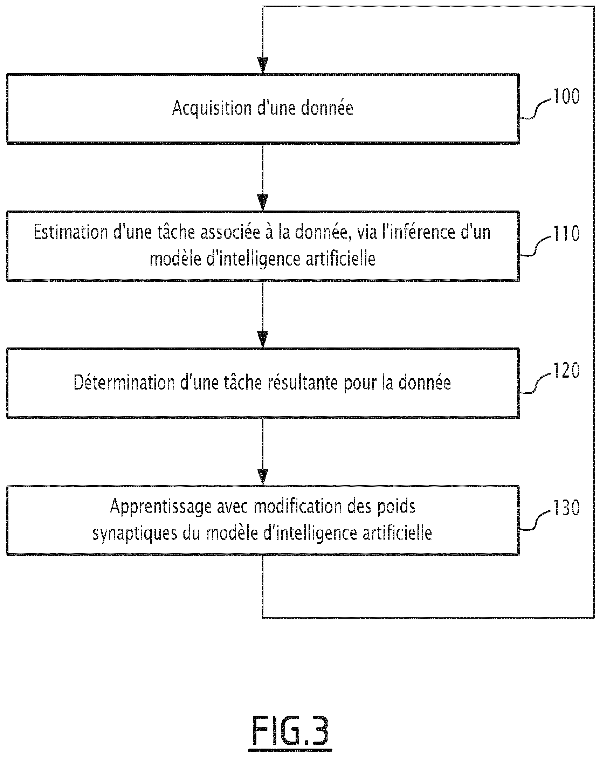

Le fonctionnement du dispositif électronique de traitement 20 selon l'invention va être à présent décrit en regard de la figure 3 représentant un organigramme du procédé de traitement selon l'invention, celui-ci étant mis en oeuvre par le dispositif de traitement 20.

Lors d'une étape initiale 100, le dispositif de traitement 20 acquiert, via son module d'acquisition 22, une donnée correspondant à un signal respectif issu du capteur 15.

En complément facultatif, lorsque le module d'acquisition 22 est connecté au capteur 15 et en outre à la mémoire tampon 32, lors de l'étape d'acquisition 100, l'acquisition de la donnée est alors typiquement effectuée depuis le capteur 15 ou alternativement depuis la mémoire tampon 32 suivant la règle de choix, cette règle de choix étant de préférence aléatoire.

Lorsqu'en complément facultatif encore, la mémoire tampon 32 comporte plusieurs zones distinctes 50, 52, 54, le module d'acquisition 22 acquiert la donnée, lors de l'étape d'acquisition 100, en choisissant alors suivant la règle de choix parmi le capteur 15 et chacune des zones distinctes 50, 52, 54, considérées de manière séparée. Autrement dit, lorsque la mémoire tampon 32 comporte par exemple trois zones distinctes, à savoir les première 50, deuxième 52 et troisième 54 zones distinctes, l'acquisition de la donnée effectuée lors de l'étape 100 l'est parmi quatre sources distinctes possibles, en comptant le capteur 15 en sus des trois zones distinctes 50, 52, 54.

À l'issue de l'étape d'acquisition 100, le dispositif de traitement 20 passe à l'étape suivante d'estimation 110, lors de laquelle il estime, via son module d'estimation 24 la tâche Y associée à la donnée acquise en inférant le modèle de prédiction 60. Autrement dit, le module d'estimation 24 fournit alors à sa sortie le vecteur de prédiction Y correspondant à la tâche, en particulier à la sortie du modèle de prédiction 60, à savoir ici en sortie de l'unité de prédiction 64.

Lors de l'étape suivante 120 de détermination, le dispositif de traitement 20 détermine, via son module de détermination 28, en calculant la grandeur représentative de l'estimation, puis en sélectionnant - en fonction de la grandeur calculée - un mode respectif de détermination parmi le mode assisté de détermination ACL et les modes supervisés de détermination SSL, AUL, la tâche résultante Y* étant alors déterminée suivant le mode de détermination sélectionné.

Le module de détermination 28 sélectionne par exemple le mode assisté de détermination ACL si la grandeur calculée est supérieure ou égale au premier seuil ; le mode semi-supervisé de détermination SSL si ladite grandeur est inférieure ou égale au deuxième seuil ; et le mode auto-supervisé de détermination AUL si ladite grandeur est strictement comprise entre le deuxième seuil et le premier seuil.

Dans l'exemple de la figure 2, décrit précédemment, la grandeur calculée est l'incertitude de prédiction E, et le module de détermination 28 sélectionne alors le mode assisté de détermination ACL si l'incertitude E est supérieure ou égale au premier seuil $E_a$ ; le mode semi-supervisé de détermination SSL si ladite incertitude E est inférieure ou égale au deuxième seuil $E_{ss}$ ; et le mode auto-supervisé de détermination AUL si ladite incertitude E est strictement comprise entre le deuxième seuil $E_{ss}$ et le premier seuil $E_a$.

Le dispositif de traitement 20 effectue ensuite, via son module d'apprentissage 30 et lors de l'étape suivante d'apprentissage 130, l'apprentissage du modèle de prédiction 60 en modifiant les poids synaptiques du modèle de prédiction 60 via l'algorithme de rétropropagation pour le calcul du gradient de chaque poids synaptique suivant la fonction de coût correspondante.

Avantageusement, l'apprentissage effectué du modèle de prédiction 60 dépend du mode de détermination sélectionné parmi le mode assisté de détermination ACL et les modes supervisés de détermination SSL, AUL lors de l'étape de détermination 120 précédente. De préférence, les poids synaptiques sont modifiés suivant la première fonction de coût si le mode assisté de détermination ACL ou le mode semi-supervisé de détermination SSL a été sélectionné précédemment ; ou bien suivant la deuxième fonction de coût si le mode auto-supervisé de détermination AUL a été sélectionné lors de l'étape de détermination 120 précédente.

À l'issue de l'étape d'apprentissage 130, le dispositif de traitement 20 retourne à l'étape initiale 100 d'acquisition afin d'acquérir une nouvelle donnée, et le procédé de traitement est alors réitéré avec la nouvelle donnée acquise.

De par cet apprentissage, le modèle de prédiction 60 est alors auto-adaptatif, en ce sens que ses paramètres, notamment ses poids synaptiques et ses fonctions d'activation, sont modifiés et adaptés au fur et à mesure que de nouvelles données sont traitées.

Cet apprentissage est en outre local, et ne nécessite en particulier pas que le dispositif électronique de traitement 20 soit connecté à un serveur électronique distant. En effet, l'apprentissage est effectué à partir des données traitées au fur et à mesure, voire en complément en outre à partir des données stockées dans la mémoire tampon 32. Ces données stockées dans la mémoire tampon 32 interviennent dans l'apprentissage du modèle de prédiction 60 lorsque le modèle d'acquisition 22 acquiert la donnée depuis ladite mémoire tampon 32, et que cette donnée issue de la mémoire tampon 32 est alors inférée par le modèle de prédiction 60, puis la sortie de cette inférence utilisée pour un nouvel apprentissage.

Ainsi, une fois que le dispositif de traitement 20 a produit, via le modèle de prédiction 60, une sortie Y concernant les données provenant du capteur 15 en continu, le dispositif de traitement 20 décide, via ses modules de détermination 28 et d'apprentissage 30, de ce qu'il faut faire avec les données, en particulier s'il faut les stocker ou non dans la mémoire tampon 32, et comment calculer la perte à utiliser pour mettre à jour les paramètres actuels du modèle de prédiction 60. Le dispositif de traitement 20 utilise pour cela l'incertitude E, fournie par l'unité de prédiction 64. Si le modèle de prédiction 60, en particulier l'unité de prédiction 64, est très incertain quant à sa prédiction, plus précisément si l'incertitude E est supérieure ou égale au premier seuil $E_a$, alors un traitement par apprentissage actif sera effectué. Dans ce cas, le dispositif de traitement 20 demande une tâche, telle qu'une étiquette, par exemple à l'utilisateur du système électronique 10, et utilise cette étiquette pour calculer la perte. L'homme du métier comprendra que ce mode actif, ou assisté, est coûteux, car il nécessite une intervention humaine, et doit donc être réduit au minimum. A l'inverse, si l'incertitude E est faible, ou plus précisément inférieure ou égale au deuxième seuil $E_{ss}$, le dispositif de traitement 20 met alors en oeuvre l'apprentissage semi-supervisé.

Dans ces deux cas, une perte respective est calculée en utilisant la tâche donnée Y* et cette perte est rétro-propagée à travers le modèle de prédiction 60, afin de calculer le gradient pour chaque paramètre du modèle de prédiction 60. Préférentiellement, les gradients ne sont pas appliqués immédiatement, mais accumulés et appliqués seulement après qu'un certain nombre de données d'entrée aient été traitées, c'est-à-dire que les gradients sont appliqués par lot de données.

Ce qui précède décrit comment le dispositif de traitement 20 traite les données en continu lorsque l'incertitude E est supérieure ou inférieure aux seuils supérieur (premier seuil $E_a$) et inférieur (deuxième seuil $E_{ss}$) respectifs. Dans un troisième cas, si l'incertitude E se situe entre ces deux limites, à savoir entre le deuxième seuil $E_{ss}$ et le premier seuil $E_a$, le dispositif de traitement 20, en particulier le modèle de prédiction 60, peut encore apprendre quelque chose des données en utilisant une technique auto-supervisée, ou d'adaptation au domaine, avec l'unité prétexte 68. Cela signifie que les données traitées ne sont jamais inutiles, ou autrement dit que quelque chose peut être appris de chaque observation.

En fait, étant donné que l'apprentissage actif est une action coûteuse et qu'un apprentissage semi-supervisé excessif pourrait introduire trop de bruit dans les tâches, l'homme du métier comprendra que l'idéal est que l'apprentissage soit majoritairement effectué en utilisant l'unité prétexte 68 avec l'algorithme d'adaptation de domaine ou auto-supervisé donné.

À titre d'exemple d'algorithme auto-supervisé, lorsque l'incertitude E concernant une image issue du capteur 15 se situe entre le deuxième seuil $E_{ss}$ et le premier seuil $E_a$ une version tournée (à un angle aléatoire) de l'image est créée via le noyau 62 et l'unité prétexte 68. Le modèle prétexte 66 de l'unité prétexte 68 prédit alors ici la rotation de l'image. Puisque l'angle de rotation est connu, une perte est facilement calculable et utilisable pour calculer le gradient d'apprentissage dans la rétropropagation. Même un simple apprentissage auto-supervisé basé sur la rotation, tel que celui décrit précédemment, permet d'apprendre des représentations utiles et aidant à réduire de manière significative la quantité de données traitées nécessaires pour obtenir une bonne performance de traitement.

Dans tous les cas, une tâche résultante respective est déterminée sur la base du vecteur de prédiction Y et de l'incertitude E. En complément facultatif, si l'incertitude E est élevée, une action conservatrice correspondante est en outre effectuée par le système électronique 10, telle qu'une action de freinage d'un véhicule lorsque le système électronique 10 est embarqué à bord dudit véhicule.

L'homme du métier observera que les premier et deuxième seuils sont par exemple prédéfinis, ou en variante évolutifs lors du traitement des données, par exemple sur la base de percentiles de la grandeur, telle que l'incertitude E, typiquement en utilisant un historique de grandeurs calculées précédemment et stockées dans la mémoire tampon 32.

En outre, le fait de stocker dans la mémoire tampon 32 des données et des tâches associées permet de s'en servir pour le calcul de pertes futures, ce qui permet alors d'atténuer le phénomène d'oubli catastrophique.

En complément encore, la règle de stockage des données et tâches associées dans la mémoire tampon 32 est fonction du type de mode de détermination sélectionné, c'est-à-dire que les tâches déterminées suivant le mode assisté de détermination ACL sont susceptibles d'être meilleures et sont plus coûteuses à obtenir. Aussi, lorsque le mode de détermination sélectionné est le mode assisté de détermination ACL, les données et tâches associées obtenues suivant ce mode sont stockées en priorité dans la mémoire tampon 32 ; ou encore si une approche probabiliste est retenue, sont stockées avec la probabilité la plus élevée, celle-ci étant typiquement proche de 1 pour le mode assisté de détermination ACL.

En variante, ladite règle de stockage est fonction des tâches déjà présentes dans la mémoire tampon 32. Les tâches qui sont moins présentes sont par exemple prioritaires pour les prochains stockages dans la mémoire tampon 32.

En variante encore, ladite règle de stockage est fonction d'une différence entre la donnée courante issue du module de détermination 28 et les données déjà présentes dans la mémoire tampon 32, par exemple en utilisant une approche de renforcement de la diversité, tel que celle décrite dans l'article « Active learning for convolutional neural networks: A core-set approach » de Sener et al, publié en 2017.

En complément encore, la règle de stockage est une règle de stockage des données et tâches associées en fonction de différents instants temporels successifs, chaque instant temporel étant associé à un couple de donnée et tâche. Autrement dit, selon cette règle de stockage, les données et tâches associées stockées dans la mémoire tampon 32 correspondent à des instants temporels échelonnés dans le temps, avec de préférence en outre un écart de temps entre deux instants temporels successifs compris entre une période temporelle minimale et une période temporelle maximale. Ceci permet alors de fournir au modèle de prédiction 60 des données qui ont été apprises à différents moments de son fonctionnement. À titre d'exemple, une première partie de la mémoire tampon 32 comporte alors un ensemble d'apprentissage initial (c'est-à-dire les données qui ont été utilisées pour l'apprentissage initial du modèle de prédiction 60), une deuxième partie de la mémoire tampon 32 comporte les données et tâches associées obtenues au cours d'une première semaine d'utilisation du dispositif de traitement 20, une troisième partie de la mémoire tampon 32 comporte les données et tâches associées obtenues au cours d'une deuxième semaine d'utilisation du dispositif de traitement 20, et ainsi de suite.

En complément encore, les données et tâches associées sont stockées dans la mémoire tampon 32 après avoir en outre fait préalablement l'objet d'une opération de transformation, également appelée augmentation.

En variante encore, la règle de stockage dans la mémoire tampon 32 comporte une comparaison des différentes données, et respectivement des différentes tâches, entre elles, afin par exemple d'avoir stockage des données et tâches associées en fonction d'un taux d'occurrence dans la mémoire tampon 32 pour chacune des tâches, typiquement afin d'avoir un stockage dans la mémoire tampon 32 qui soit proportionnel à l'occurrence de la tâche, en termes de quantité de données stockées.

Outre les différentes alternatives de la règle de stockage décrites ci-dessus, le module d'apprentissage 30 est également configuré pour supprimer des données de la mémoire tampon 32, notamment afin de pouvoir stocker de nouvelles données dans cette mémoire tampon 32, tout en conservant une quantité de données stockées dans la mémoire tampon 32 inférieure à un seuil maximal prédéfini.

À titre d'exemple, selon une stratégie de « troupeau », le module d'apprentissage 30 conserve alors les données et tâches associées proches de la moyenne d'une distribution de tâches. De plus, la distance par rapport à la moyenne des distributions existantes dans la mémoire tampon 32 est utilisée comme moyen de supprimer, ou au contraire de stocker à plusieurs reprises, les exemples.

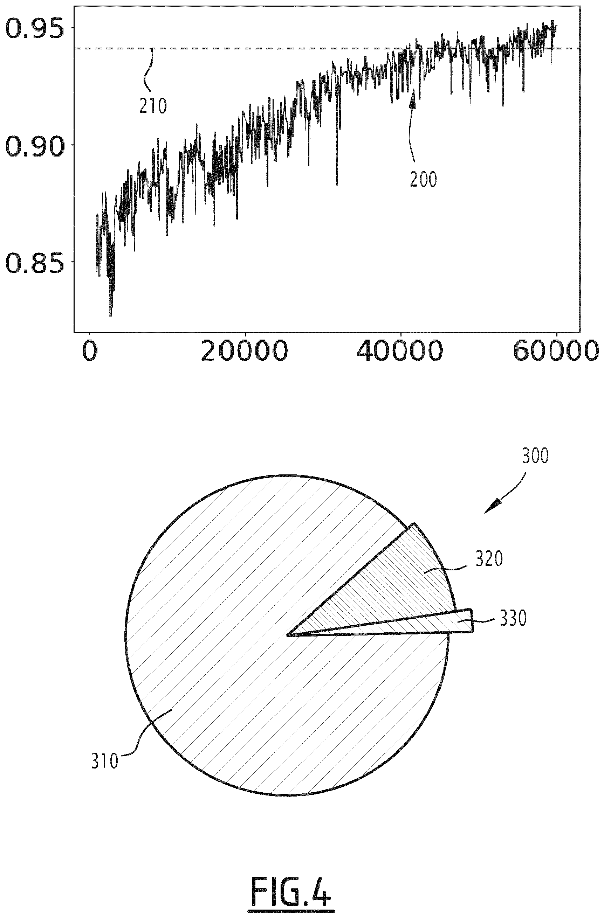

La figure 4 illustre une mise en oeuvre du dispositif de traitement 20 selon l'invention sur des images MNIST issues de la base de données MNIST connue en soi. Cette base de base de données MNIST (de l'anglais pour *Modified* ou *Mixed National Institute of Standards and Technology*) est une base de 60 000 images de chiffres écrits à la main, couramment utilisée pour effectuer des tests dans le domaine de l'apprentissage automatique, ou apprentissage machine (de l'anglais *machine learning*). Dans cette mise en oeuvre, le modèle de prédiction 60 en forme d'un perceptron simple à couches multiples a d'abord été pré-entraîné en utilisant un sous-ensemble de 1000 images MNIST. Ensuite, les 59 000 images MNIST restantes ont été fournies au fur et à mesure en entrée du modèle de prédiction 60 en continu. La mémoire tampon 32 a été initialement remplie avec les 1000 images MNIST utilisées lors de la phase de pré-entraînement. La mémoire tampon 32 a une taille maximale de 1000 images MNIST. Les données sont écrites et lues dans la mémoire tampon 32 à des index aléatoires.

Dans cet exemple, en mode assisté de détermination ACL, la tâche fournie par l'utilisateur est l'étiquette du chiffre écrit à la main, également appelé chiffre MNIST. Le mode semi-supervisé de détermination SSL utilise la prédiction effectuée par le modèle de prédiction 60 (c'est-à-dire un pseudo-étiquetage). Le mode auto-supervisé de détermination AUL vise à prédire si le chiffre MNIST a été retourné horizontalement (c'est-à-dire en miroir) ou non. Les premier et deuxième seuils d'incertitude utilisés sont ici évolutifs pour être égaux aux 5ème et 85ème percentiles de l'incertitude calculée sur toutes les estimations d'incertitude précédemment effectuées (tel qu'en moyenne courante), ces premier et deuxième seuils ayant été initialisés sur la base des incertitudes contenues dans la mémoire tampon 32. Les gradients ont été appliqués par mini-lots de dix exemples traités. Lors de l'écriture des données dans la mémoire tampon 32, une étape d'augmentation des données a été utilisée, au cours de laquelle les pixels ont subi un bruitage encore gaussien (de l'anglais *still Gaussian noising*) (c'est-à-dire qu'ils ont été additionnés avec des échantillons d'une distribution gaussienne) et les pixels ont également été décalés en abscisse et en ordonnée - les nouveaux pixels entrant dans l'image ont été traités comme des pixels noirs (c'est-à-dire que les pixels ne s'enroulent pas). Lors de l'écriture dans la mémoire tampon 32 suite au mode assisté de détermination ACL, dix images augmentées ont été écrites dans ladite mémoire 32. Lors de l'écriture dans la mémoire tampon 32 suite au mode semi-supervisé de détermination SSL, seule une seule image augmentée a été écrite dans ladite mémoire 32.

La courbe 200, visible à la figure 4, représente alors une précision de la prédiction fournie par le modèle de prédiction 60, ceci pour les 10 000 images de test de la base MNIST, et l'évolution temporelle de la courbe 200 montre, qu'à mesure que le modèle de prédiction 60 voit de plus en plus d'exemples dans le flux de données, la précision sur ces 10 000 images de test MNIST s'améliore, bien qu'elle soit sujette à oscillation. Notamment, la précision après avoir vu tous les chiffres MNIST est supérieure à celle d'un modèle de l'état de la technique entraîné une fois (c'est-à-dire qu'ils ont vu le même nombre d'exemples), cette précision du modèle de l'état de la technique étant représentée sous forme de la droite 210 en trait pointillé.

Le fait que les performances du dispositif de traitement 20 selon l'invention, et en particulier la précision du modèle de prédiction 60 au fur et à mesure de son apprentissage en continu, soient légèrement supérieures à celles du modèle entièrement supervisé de l'état de la technique après une seule itération d'entraînement (de l'anglais *epoch*) est encore plus notable en considérant en outre le graphique circulaire 300 représenté aussi à la figure 4.

Le graphique circulaire 300 comporte trois portions de disque 310, 320, 330, représentant chacune un taux de sélection, ou taux d'utilisation, d'un mode de détermination respectif, à savoir une première portion 310 représentant le taux du mode auto-supervisé de détermination AUL, une deuxième portion 320 représentant le taux du mode semi-supervisé de détermination SSL, et une troisième portion 330 représentant le taux du mode assisté de détermination ACL. La première portion 310 correspond alors à un taux de 88 %, ou 0,88 ; la deuxième portion 320 à un taux de 10 %, ou 0,1 ; et enfin la troisième portion 330 à seulement un taux de 2 %, 0,02. Autrement dit, seuls 2 % des points de données du flux de données ont été étiquetés via le mode assisté de détermination ACL, c'est-à-dire via le mode actif, ce qui correspond à 1 200 images étiquetées supplémentaires par rapport à celles utilisées lors de la phase de pré-entraînement. L'homme du métier observera également dans cet exemple que, conformément à ce qui est souhaité, la majeure partie des points de données du flux de données, c'est-à-dire la majeure partie des images, est utilisée pour calculer les pertes auto-supervisées suivant le mode auto-supervisé de détermination AUL.

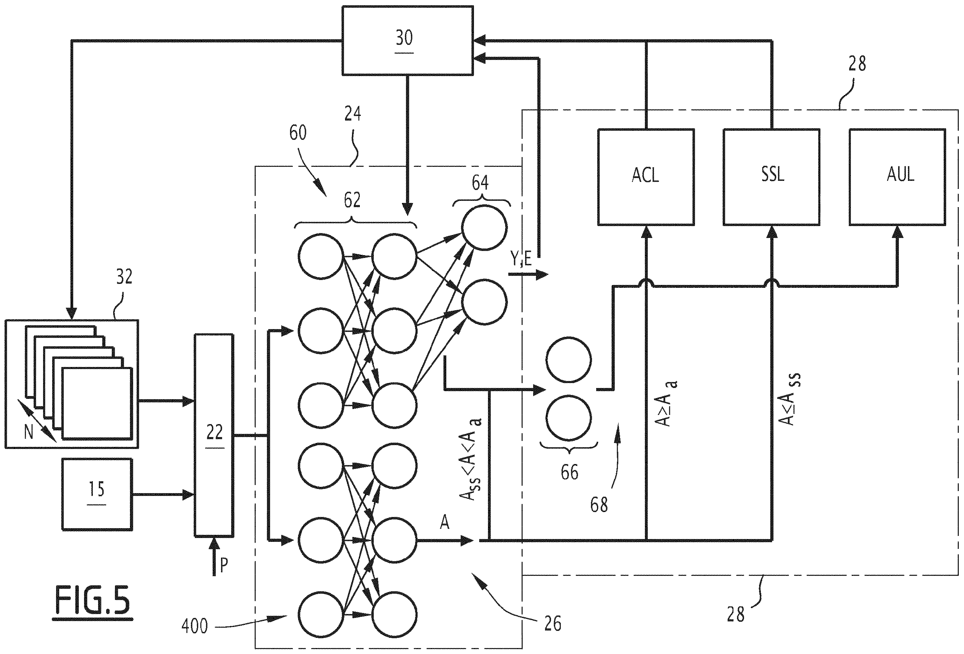

La figure 5 illustre un deuxième mode de réalisation pour lequel les éléments analogues à ceux du premier mode de réalisation décrit précédemment, sont repérés par des références identiques, et ne sont pas décrits à nouveau.

Selon le deuxième mode de réalisation, l'ensemble 26 de modèles d'intelligence artificielle 26 comporte en outre un modèle de détection d'anomalie 400.

Le modèle de détection d'anomalie 400 est connu en soi, et est par exemple décrit dans l'article « Deep learning for anomaly détection: A survey » de R. Chalapathy et al publié en 2019, ou encore dans l'article « An overview of deep learning based methods for unsupervised and semi-supervised anomaly détection in videos » de B. R. Kiran et al publié en 2018.

Le modèle de détection d'anomalie 400 est un modèle d'analyse entraîné à détecter automatiquement des données distinctes des données vues lors de l'apprentissage. Le modèle de détection d'anomalie 400 est apte à être couplé avec n'importe quel modèle de représentation des données (choisi en fonction de l'application, des contraintes, des données, etc).

Le modèle de détection d'anomalie 400 est typiquement entraîné de manière semi-supervisée. Le jeu d'entraînement est composé d'une seule tâche, celle des données normales (ou nominales). Au cours de son utilisation, le modèle de détection d'anomalie 400 est alors configuré pour distinguer des données appartenant à cette tâche entraînée de données normales, par rapport à des données anormales (les anomalies). Le modèle de détection d'anomalie 400 est aussi appelé classifieur à une classe (de l'anglais *one-class classifier*).

En variante, le modèle de détection d'anomalie 400 est entraîné de manière supervisée avec un jeu de données d'anomalies, au lieu d'un jeu de données normales.

Selon ce deuxième mode de réalisation, la grandeur est alors typiquement un coefficient d'anomalie A calculé via le modèle de détection d'anomalie 400. Le premier seuil associé au coefficient d'anomalie A est alors noté $A_a$, et en complément le deuxième seuil associé au coefficient d'anomalie A est noté $A_{ss}$.

En variante, le modèle de détection d'anomalie 400 est entraîné de manière non-supervisée, avec un jeu de données comprenant des données anormales, mais non identifiées préalablement parmi l'ensemble du jeu de données.

En variante, la grandeur est une combinaison de l'incertitude de prédiction E calculée via le modèle de prédiction 60 et du coefficient d'anomalie A calculé via le modèle de détection d'anomalie 400.

Selon cette variante, à titre d'exemple, la grandeur est égale au produit de l'incertitude de prédiction E calculée via le modèle de prédiction 60 et du coefficient d'anomalie A calculé via le modèle de détection d'anomalie 400. À titre d'exemple, l'incertitude de prédiction E est l'entropie de la distribution des prédictions, le coefficient d'anomalie A est une erreur de reconstruction de l'entrée lorsque le modèle de détection d'anomalie 400 est un auto-encodeur (de l'anglais *auto-encoder*), et la grandeur combinée est alors le résultat de la multiplication de l'entropie par l'erreur de reconstruction. Selon cette variante, les points les plus incertains et les plus anormaux présentent alors les grandeurs de valeurs les plus élevées, et le mode assisté de détermination ACL est alors sélectionné pour ces points.

Selon cette variante, à titre d'exemple supplémentaire de combinaison, la grandeur est égale au masquage binaire de l'incertitude E par le coefficient d'anomalie A.

Hormis la sélection du mode de détermination effectuée - selon ce deuxième mode de réalisation - à partir notamment du coefficient d'anomalie A, comme décrit ci-dessus, le fonctionnement de ce deuxième mode de réalisation est similaire à celui du premier mode de réalisation décrit précédemment, et n'est donc pas décrit à nouveau.

Selon ce deuxième mode de réalisation, l'utilisation conjointe du modèle de détection d'anomalie 400 en parallèle du modèle de prédiction 60 vise à avoir une analyse plus fiable, qu'avec l'utilisation de la seule incertitude E issue du modèle de prédiction 60.

Selon ce deuxième mode de réalisation, le coefficient d'anomalie A est alors utilisé à la place de l'incertitude E, utilisée selon le premier mode de réalisation pour la sélection du mode de détermination ; ou bien conjointement avec celle-ci, c'est-à-dire en combinaison avec ladite incertitude E.

Lorsque la grandeur prise en compte pour la sélection du mode de détermination est la combinaison de l'incertitude E et du coefficient d'anomalie A, l'homme du métier observera en outre que cela permet encore une discrimination plus marquée pour la sélection du mode de détermination, en particulier lorsque cette combinaison est le produit de l'incertitude E et du coefficient d'anomalie A, le multiple de deux valeurs faibles étant comparativement plus faible, et de manière corollaire le multiple de deux valeurs élevées étant comparativement plus élevé.

Le modèle de détection d'anomalie 400, et l'utilisation associée du coefficient d'anomalie A pour la sélection du mode de détermination, semblent notamment particulièrement appropriés pour le traitement de toute donnée inhabituelle qui pourrait être mal traitée via le modèle de prédiction 60. Le modèle de détection d'anomalie 400 permettent alors dans ce cas une identification plus robuste la donnée inhabituelle. Plus précisément, la donnée inhabituelle est, par exemple, une donnée associée à une tâche inconnue du modèle de prédiction, c'est-à-dire associée à une nouvelle tâche ; une attaque ; une donnée associée à une défaillance du capteur 15 ; ou encore une donnée provenant d'une distribution connue mais dérivante. Ce type de donnée inhabituelle entrera alors dans la catégorie "anomalie" pour le modèle de détection d'anomalie 400, par opposition à la catégorie normale, c'est-à-dire celle des données similaires à celles qui ont été utilisées jusqu'à présent dans le cadre de la surveillance. Traditionnellement, ces points de données seraient mal classés par le modèle de prédiction 60.

Les autres avantages de ce deuxième mode de réalisation sont analogues à ceux du premier mode de réalisation décrit précédemment, et ne sont pas décrits à nouveau.

La figure 6 illustre un troisième mode de réalisation pour lequel les éléments analogues à ceux des premier et deuxième modes de réalisation décrits précédemment, sont repérés par des références identiques, et ne sont pas décrits à nouveau.

Selon le troisième mode de réalisation, le module d'apprentissage 30 comprend en outre une unité d'apprentissage incrémental 500 configurée pour créer un ensemble de pseudo-exemple(s), puis pour mettre en oeuvre un apprentissage continu du module d'estimation 24 en réinjectant l'ensemble de pseudo-exemple(s) en entrée dudit module d'estimation 24.

La réinjection concerne le mécanisme d'inférence et consiste à réinjecter la sortie au niveau de l'entrée. A chaque fois qu'une inférence est réalisée, la sortie calculée constitue un auto-label. La réinjection est par exemple décrite dans l'article « Beneficial Effect of Combined Replay for Continual Learning » de Solinas et al publié en 2021.

L'unité d'apprentissage incrémental 500 comporte par exemple un auto-encodeur. L'auto-encodeur est un réseau de neurones dont l'objectif est de reconstruire la valeur de l'entrée, c'est-à-dire prédire une valeur cible X' la plus proche de la valeur de l'entrée X. Ainsi, un auto-encodeur a une couche d'entrée recevant l'entrée X, une couche de sortie délivrant la valeur cible X', ces couches ont le même nombre de neurones et sont reliées par une ou plusieurs couches cachées. Les fonctions de coût associées à l'auto-encodeur sont par exemple l'erreur quadratique moyenne, également notée MSE (de l'anglais *Mean Squared Error)*; l'erreur absolue moyenne, également appelée perte L1 ; ou encore l'entropie croisée binaire.

Dans l'exemple de la figure 6, la mémoire tampon 32 comporte plusieurs zones 50, 52, 54, à savoir la première zone 50 ayant une première taille $N_1$, la deuxième zone 52 ayant une deuxième taille $N_2$, et la troisième zone 54 ayant une troisième taille $N_3$. Chacune des première $N_1$, deuxième $N_2$, et troisième $N_3$ tailles est de préférence inférieure à une taille N de la mémoire tampon 32 en forme d'une zone unique dans l'exemple de la figure 2 ou dans celui de la figure 5.

En outre, la somme desdites première $N_1$, deuxième $N_2$, et troisième $N_3$ tailles est de préférence inférieure ou égale à ladite taille N, afin d'avoir une taille globale de la mémoire tampon 32 selon le troisième mode de réalisation au plus égale à celle de la mémoire tampon 32 selon les premier et deuxième modes de réalisation.

Dans l'exemple de la figure 6, la première zone 50 est configurée pour stocker une ou des tâche(s) déterminée(s) suivant le mode assisté de détermination ACL et de donnée(s) associée(s), et la deuxième zone 52, distincte de la première zone 50, est configurée pour stocker une ou des tâche(s) déterminée(s) suivant le mode semi-supervisé de détermination SSL et de donnée(s) associée(s).

En complément, la troisième zone 54 est configurée pour stocker un ou plusieurs pseudo-exemple(s) créé(s) par l'unité d'apprentissage incrémentale 500.

La première zone 50 est également appelée tampon de "relecture active", et contient alors les points de données étiquetés par un utilisateur externe sur lesquels le modèle de prédiction 60 était incertain et qui correspondent à de nouvelles connaissances ou données devant être mieux consolidées par le modèle de prédiction 60.

La deuxième zone 52 est également appelée tampon de "semi-relecture", et stocke les points de données et leurs pseudo-étiquettes qui ont été prédits par le modèle de prédiction 60 avec une confiance élevée (faible incertitude E ou faible coefficient d'anomalie A). La mémoire tampon 32 est alors utilisée pour générer les pseudo-exemples.

Le fonctionnement de ce troisième mode de réalisation est similaire à ceux des premier et deuxième modes de réalisation décrits précédemment, et va être à présent décrit essentiellement pour ce qui concerne les particularités du troisième mode de réalisation.

La sortie de l'unité d'apprentissage incrémental 500 est réinjectée comme sortie du noyau 62. Celle-ci est alors à nouveau propagée à travers l'auto-codeur de l'unité d'apprentissage incrémental 500 et à nouveau réinjectée et ainsi de suite. En procédant ainsi sur plusieurs cycles, l'unité d'apprentissage incrémental 500 permet alors de générer des pseudo-exemples qui correspondent aux connaissances déjà présentes dans le modèle de prédiction 60. Les sorties de l'auto-codeur de l'unité d'apprentissage incrémental 500 sont de préférence en outre sauvegardées dans la troisième zone 54, également appelée tampon de pseudo-exemples, à chaque cycle de réinjection.

Lorsque le nombre aléatoire généré pour la mise en oeuvre de la règle de choix lors de l'acquisition de la donnée par le module d'acquisition 20 se situe ensuite entre une autre plage de valeurs, les vecteurs de ce tampon de pseudo-exemples, c'est-à-dire les vecteurs contenus dans la troisième zone 54, seront à nouveau réinjectés dans le noyau 62. Cette fois, une perte sera calculée entre la nouvelle sortie de l'auto-codeur et la sortie de l'auto-codeur précédemment stockée dans le tampon de pseudo-exemple, c'est-à-dire stockée dans la troisième zone 54 la fois précédente où cette sortie d'auto-codeur a été réinjectée. Cela permet alors de forcer le modèle de prédiction 60 à reproduire le comportement qu'il avait à un instant temporel précédent dans le temps.

Les sorties de l'unité de prédiction 64 sont également comparées aux sorties de l'unité de prédiction 64 de celles stockées dans le tampon de pseudo-exemples, ou troisième zone 54 ; et une perte est calculée et rétro-propagée et, préférentiellement, accumulée jusqu'à ce qu'un certain nombre d'entrées aient été traitées dans un lot.

Sinon, les points de données sont extraits de l'entrée du capteur 15 en continu ou du tampon de relecture active, i.e. première zone 50, et ce en fonction de la règle de choix, par exemple en fonction du nombre aléatoire généré par le module d'acquisition 20. Lorsque les points de données sont acquis dans le tampon de relecture active et inférés dans le modèle de prédiction 60, la perte est calculée normalement en l'unité de prédiction 64 en utilisant l'étiquette correspondante. Une perte de reconstruction de la sortie du noyau 62 est également calculable via l'auto-codeur.

Lorsqu'un point de données est acquis depuis le capteur 15, le fonctionnement du dispositif de traitement 20 est tel que décrit précédemment dans les premier et deuxième modes de réalisation. Les points de données sont étiquetés et leurs pertes sont calculées en fonction de leur incertitude de prédiction E, ou du coefficient d'anomalie A, ou encore d'une combinaison des deux.

En entrelaçant de préférence ces différentes procédures, le dispositif de traitement 20, en particulier son modèle de prédiction 60, est encore davantage capable d'apprendre de nouveaux types de tâches, en particulier de nouveaux types de classes de données et de les consolider, tout en préservant les anciennes connaissances et en atténuant les oublis catastrophiques.

L'homme du métier comprendra bien entendu que le découpage de la mémoire tampon 32 en plusieurs zones distinctes, notamment en la première zone 50 associée au mode assisté de détermination ACL et la deuxième zone 52, distincte de la première zone 50, associée au mode semi-supervisé de détermination SSL, est compatible avec les premier et deuxième modes de réalisation décrits précédemment, bien que la mémoire tampon 32 soit représentée sous forme d'une unique zone de mémoire dans les exemples des figures 2 et 5.

Comme indiqué précédemment, la mémoire tampon 32 permet de limiter les oublis catastrophiques en stockant des données et des tâches associées, afin de pouvoir les utiliser régulièrement pour un réapprentissage du modèle de prédiction 60.

Les autres avantages de ce troisième mode de réalisation sont analogues à ceux des premier et deuxième modes de réalisation décrits précédemment, et ne sont pas décrits à nouveau.

## Revendications

**1.** Dispositif électronique (20) de traitement de donnée(s), le dispositif (20) étant destiné à être connecté à un capteur (15), et comprenant :

- un module d'acquisition (22) apte à être connecté au capteur (15), et configuré pour acquérir une donnée ;
- un module d'estimation (24) configuré pour estimer une tâche associée à la donnée, via l'inférence d'un modèle de prédiction (60) ;
- un ensemble (26) de modèle(s) d'intelligence artificielle, ledit ensemble (26) comportant le modèle de prédiction (60) ; et
- un module de détermination (28) configuré pour déterminer une tâche résultante (Y*) pour la donnée ;
**caractérisé en ce que** le module de détermination (28) est configuré pour calculer une grandeur (E, A) représentative de l'estimation ; puis pour sélectionner, en fonction de la grandeur (E, A) calculée, un mode de détermination parmi un mode assisté de détermination (ACL) et plusieurs modes supervisés de détermination ; et pour déterminer, suivant le mode de détermination sélectionné, la tâche résultante (Y*) ;

en mode assisté de détermination (ACL), le module de détermination (28) étant configuré pour envoyer à un utilisateur une requête en fourniture d'une tâche pour la donnée, et la tâche déterminée étant alors la tâche fournie par l'utilisateur ; et

chaque mode supervisé de détermination (SSL, AUL) étant dépourvu d'envoi de requête à l'utilisateur, et **en ce que** le dispositif (20) comprend en outre un module d'apprentissage (30) configuré pour modifier des poids synaptiques du modèle de prédiction (60) en utilisant un algorithme de rétropropagation pour le calcul du gradient de chaque poids synaptique suivant une fonction de coût, la fonction de coût dépendant de la grandeur (E, A) calculée.

**2.** Dispositif (20) selon la revendication 1, dans lequel le module de détermination (28) est configuré pour sélectionner le mode de détermination via une comparaison de la grandeur (E, A) calculée avec au moins un seuil ; le mode assisté de détermination (ACL) étant de préférence sélectionné via la comparaison de ladite grandeur (E, A) avec un premier seuil ($E_a$, $A_a$).

**3.** Dispositif (20) selon la revendication 1 ou 2, dans lequel les modes supervisés de détermination incluent un mode semi-supervisé de détermination (SSL) et un mode auto-supervisé de détermination (AUL) ;

en mode semi-supervisé de détermination (SSL), le module de détermination (28) étant de préférence configuré pour déterminer la tâche résultante (Y*) à partir de la tâche prédite ;

en mode auto-supervisé de détermination (AUL), le module de détermination (28) étant de préférence configuré pour déterminer une tâche additionnelle, en appliquant une transformation prétexte à la donnée acquise, la tâche additionnelle étant alors obtenue via l'inférence d'un modèle prétexte (66) sur la donnée transformée, le modèle prétexte (66) étant un modèle d'intelligence artificielle inclus dans l'ensemble (26) de modèle(s) d'intelligence artificielle.

**4.** Dispositif (20) selon les revendications 2 et 3, dans lequel le module de détermination (28) est configuré pour sélectionner le mode semi-supervisé de détermination (SSL) via la comparaison de la grandeur (E, A) calculée avec un deuxième seuil ($E_{ss}$, $A_{ss}$), le deuxième seuil ($E_{ss}$, $A_{ss}$) étant distinct du premier seuil ($E_a$, $A_a$).

**5.** Dispositif (20) selon la revendication 3 ou 4, dans lequel le module d'apprentissage (30) est configuré pour modifier les poids synaptiques suivant une première fonction de coût si le mode de détermination sélectionné est le mode assisté de détermination (ACL) ou le mode semi-supervisé de détermination (SSL) ; et respectivement suivant une deuxième fonction de coût distincte de la première fonction de coût si le mode de détermination sélectionné est le mode auto-supervisé de détermination (AUL).

**6.** Dispositif (20) selon l'une quelconque des revendications précédentes, dans lequel la grandeur est une grandeur représentative d'un défaut de l'estimation ;

la grandeur étant de préférence une incertitude de prédiction (E) calculée via le modèle de prédiction (60) ; l'ensemble (26) de modèle(s) d'intelligence artificielle comportant de préférence en outre un modèle de détection d'anomalie (400) ;

la grandeur étant de préférence encore un coefficient d'anomalie (A) calculé via le modèle de détection d'anomalie (400) ;

la grandeur étant de préférence encore une combinaison de l'incertitude de prédiction (E) calculée via le modèle de prédiction (60) et du coefficient d'anomalie (A) calculé via le modèle de détection d'anomalie (400).

**7.** Dispositif (20) selon les revendications 5 et 6, dans lequel le module de détermination (28) est configuré pour sélectionner le mode assisté de détermination (ACL) si la grandeur (E, A) calculée est supérieure au premier seuil ($E_a$, $A_a$) ; pour sélectionner le mode semi-supervisé de détermination (SSL) si ladite grandeur (E, A) est inférieure au deuxième seuil ($E_{ss}$, $A_{ss}$), le deuxième seuil ($E_{ss}$, $A_{ss}$) étant distinct du premier seuil ($E_a$, $A_a$) ; et pour sélectionner le mode auto-supervisé de détermination (AUL) si ladite grandeur (E, A) est comprise entre le deuxième seuil ($E_{ss}$, $A_{ss}$) et le premier seuil ($E_a$, $A_a$).

**8.** Dispositif (20) selon l'une quelconque des revendications précédentes, dans lequel le dispositif (20) comprend en outre une mémoire tampon (32), et le module d'apprentissage (30) est connecté à la mémoire tampon (32), et configuré en outre pour stocker, suivant une règle de stockage et dans la mémoire tampon (32), la donnée et la tâche déterminée associée, issues du module de détermination (28) ;

la règle de stockage étant de préférence choisie parmi le groupe consistant en : une règle en fonction d'une probabilité de chaque type de tâche ; une règle en fonction de type(s) de tâche(s) déjà stocké(s) en mémoire tampon (32) ; une règle en fonction d'une pertinence de chaque type de tâche ; une règle en fonction d'une priorité de chaque type de tâche ; une règle en fonction d'une pertinence de chaque donnée ; et une règle aléatoire.

la mémoire tampon (32) comportant de préférence une première zone pour le stockage de tâche(s) déterminée(s) suivant le mode assisté de détermination (ACL) et de donnée(s) associée(s), et une deuxième zone pour le stockage de tâche(s) déterminée(s) suivant le mode semi-supervisé de détermination (SSL) et de donnée(s) associée(s), la deuxième zone étant distincte de la première ; et

lors du stockage dans la mémoire tampon (32) de nouvelle(s) donnée(s) et tâche(s) associée(s), le module d'apprentissage (30) étant de préférence en outre configuré pour effacer, selon une règle de mise à jour, une ou plusieurs données et tâches préalablement stockées.

**9.** Dispositif (20) selon la revendication 8, dans lequel le module d'acquisition (22) est connecté à la mémoire tampon (32), et est configuré en outre pour acquérir la donnée depuis une source choisie, selon une règle de choix, parmi le capteur (15) et la mémoire tampon (32) ;

la règle de choix étant de préférence une règle aléatoire ;

la source étant de préférence choisie parmi le capteur (15) et chacune des zones distinctes séparément, lorsque la mémoire tampon (32) comporte plusieurs zones distinctes.

**10.** Dispositif (20) selon la revendication 8 ou 9, dans lequel au moins un module parmi le module d'apprentissage (30) et le module d'acquisition (22) est configuré en outre pour générer des donnée(s) et tâche(s) additionnelle(s) en appliquant une opération de transformation à des donnée(s) et tâche(s) stockée(s) ou à stocker dans la mémoire tampon (32) ;

l'opération de transformation étant de préférence choisie parmi le groupe consistant en : une opération de floutage, une opération de changement de couleur, une opération de recadrage, et une opération de remise à l'échelle, une opération de fenêtrage temporel, une opération d'ajout de bruit, une opération de dilatation, et une opération de contraction.

**11.** Dispositif (20) selon l'une quelconque des revendications 8 à 10, dans lequel le module d'apprentissage (30) est configuré en outre pour compresser la donnée et la tâche issues du module de détermination (28), puis pour stocker la donnée et la tâche compressées dans la mémoire tampon (32) ; et le module d'acquisition (22) est alors configuré pour décompresser lesdites donnée et tâche compressées, avant transmission au module d'estimation (24).

**12.** Dispositif (20) selon l'une quelconque des revendications précédentes, dans lequel le module d'apprentissage (30) comprend en outre une unité d'apprentissage incrémental (500) configurée pour créer un ensemble de pseudo-exemple(s), puis pour mettre en oeuvre un apprentissage continu du module d'estimation (24) en réinjectant l'ensemble de pseudo-exemple(s) en entrée dudit module d'estimation (24).

**13.** Système électronique (10) comprenant un capteur (15) et un dispositif électronique (20) de traitement de donnée(s) connecté au capteur (15),
**caractérisé en ce que** le dispositif électronique de traitement (20) est selon l'une quelconque des revendications précédentes, et au moins une donnée à traiter est un élément présent dans une scène captée par le capteur (15).

**14.** Procédé de traitement de donnée(s), le procédé étant mis en oeuvre par un dispositif électronique de traitement (20) destiné à être connecté à un capteur (15) et comportant un ensemble (26) de modèle(s) d'intelligence artificielle, le procédé comprenant les étapes suivantes :

- acquisition d'une donnée correspondant à un signal issu du capteur (15) ;
- estimation d'une tâche associée à la donnée, via l'inférence d'un modèle de prédiction (60) inclus dans l'ensemble (26) de modèle(s) d'intelligence artificielle ; et
- détermination d'une tâche résultante (Y*) pour la donnée ;
**caractérisé en ce que** l'étape de détermination comporte en outre le calcul d'une grandeur (E, A) représentative de l'estimation ; puis la sélection, en fonction de la grandeur (E, A) calculée, d'un mode de détermination parmi un mode assisté de détermination (ACL) et plusieurs modes supervisés de détermination ; et la détermination, suivant le mode de détermination sélectionné, de la tâche résultante (Y*) ;

le mode assisté de détermination (ACL) comportant un envoi à un utilisateur d'une requête en fourniture d'une tâche pour la donnée, et la tâche déterminée étant alors la tâche fournie par l'utilisateur ; et

chaque mode supervisé de détermination (SSL, AUL) étant dépourvu d'envoi de requête à l'utilisateur, et **en ce que** le procédé comprend en outre une étape d'apprentissage comportant une modification des poids synaptiques du modèle de prédiction (60) en utilisant un algorithme de rétropropagation pour le calcul du gradient de chaque poids synaptique suivant une fonction de coût, la fonction de coût dépendant de la grandeur (E, A) calculée.

15. Programme d'ordinateur comportant des instructions logicielles qui, lorsqu'elles sont exécutées par un ordinateur, mettent en oeuvre un procédé selon la revendication précédente.

FIG.1

FIG.2

| | |
|---|---|
| Acquisition d'une donnée | 100 |

| | |
|---|---|
| Estimation d'une tâche associée à la donnée, via l'inférence d'un modèle d'intelligence artificielle | 110 |

| | |
|---|---|
| Détermination d'une tâche résultante pour la donnée | 120 |

| | |
|---|---|
| Apprentissage avec modification des poids synaptiques du modèle d'intelligence artificielle | 130 |

## FIG.3

FIG.4

FIG.5

FIG.6

# EP 4 322 061 A1

**Europäisches Patentamt**
**European Patent Office**
**Office européen des brevets**

## RAPPORT DE RECHERCHE EUROPEENNE

Numéro de la demande

EP 23 19 0239

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ISMAIL ELEZI ET AL: "Not All Labels Are Equal: Rationalizing The Labeling Costs for Training Object Detection", ARXIV.ORG, CORNELL UNIVERSITY LIBRARY, 201 OLIN LIBRARY CORNELL UNIVERSITY ITHACA, NY 14853, 29 novembre 2021 (2021-11-29), XP091089568, * abstract; sections 1, 3, 3.1, 3.2, 3.3, 4, 4.1; Equations 3 -10; figures 1, 2 * ----- | 1-15 | INV. G06N3/045 G06N3/084 G06N3/091 G06N3/0895 |
| A | Wang Qunbo ET AL: "Combination of Active Learning and Self-Paced Learning for Deep Answer Selection with Bayesian Neural Network", , 31 décembre 2020 (2020-12-31), pages 1-8, XP093036037, Extrait de l'Internet: URL:https://ecai2020.eu/papers/449_paper.pdf [extrait le 2023-03-30] * abstract; sections 1, 3, 4, 4.1, 4.2, 4.3; equations 13, 14; algorithm 2; figures 1, 2 * ----- -/-- | 1-15 | DOMAINES TECHNIQUES RECHERCHES (IPC) G06N |

Le présent rapport a été établi pour toutes les revendications

| Lieu de la recherche | Date d'achèvement de la recherche | Examinateur |
|---|---|---|
| La Haye | 18 décembre 2023 | Tebbal Barracosa, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

**EP 23 19 0239**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FAZAKIS ET AL: "Combination of Active Learning and Semi-Supervised Learning under a Self-Training Scheme", ENTROPY, vol. 21, no. 10, 10 octobre 2019 (2019-10-10), page 988, XP055847469, DOI: 10.3390/e21100988 * abstract; section 3; algorithm 1; figure 1 * | 1-15 | |
| A | JAVAD ZOLFAGHARI BENGAR ET AL: "Reducing Label Effort: Self-Supervised meets Active Learning", ARXIV.ORG, CORNELL UNIVERSITY LIBRARY, 201 OLIN LIBRARY CORNELL UNIVERSITY ITHACA, NY 14853, 25 août 2021 (2021-08-25), XP091038880, * abstract; sections 1, 3, 3.1, 3.1; figures 1, 2 * | 1-15 | |
| A | NGUYEN VU-LINH ET AL: "How to measure uncertainty in uncertainty sampling for active learning", MACHINE LEARNING, SPRINGER US, NEW YORK, vol. 111, no. 1, 18 juin 2021 (2021-06-18) , pages 89-122, XP037683284, ISSN: 0885-6125, DOI: 10.1007/S10994-021-06003-9 [extrait le 2021-06-18] * abstract; section 2 * | 1-15 | |

DOMAINES TECHNIQUES RECHERCHES (IPC)

-/--

Le présent rapport a été établi pour toutes les revendications

| Lieu de la recherche | Date d'achèvement de la recherche | Examinateur |
|---|---|---|
| La Haye | 18 décembre 2023 | Tebbal Barracosa, B |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

**EP 23 19 0239**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 3 112 413 A1 (COMMISSARIAT ENERGIE ATOMIQUE [FR]) 14 janvier 2022 (2022-01-14) * abrégé; revendications 1-12 * ----- | 1-15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 18 décembre 2023 | Tebbal Barracosa, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
....................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 19 0239

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-12-2023

| Document brevet cité au rapport de recherche | | Date de publication | Membre(s) de la famille de brevet(s) | | Date de publication |
|---|---|---|---|---|---|
| FR 3112413 | A1 | 14-01-2022 | EP | 4179469 A1 | 17-05-2023 |
| | | | FR | 3112413 A1 | 14-01-2022 |
| | | | US | 2023252271 A1 | 10-08-2023 |
| | | | WO | 2022008605 A1 | 13-01-2022 |

EPO FORM P0460

Pour tout renseignement concernant cette annexe : voir Journal Officiel de l'Office européen des brevets, No.12/82

**EP 4 322 061 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **I. ELEZI et al.** *Tocards Reducing Labeling Cost in Deep Object Détection,* 2021
- **SENER et al.** *Active learning for convolutional neural networks: A core-set approach,* 2017
- **R. CHALAPATHY et al.** *Deep learning for anomaly détection: A survey,* 2019
- **B. R. KIRAN et al.** *An overview of deep learning based methods for unsupervised and semi-supervised anomaly détection in videos,* 2018
- **SOLINAS et al.** *Beneficial Effect of Combined Replay for Continual Leaming,* 2021